(19) Europäisches Patentamt
European Patent Office
Office européen des brevets

(11) EP 3 741 807 A1

(12) EUROPEAN PATENT APPLICATION

(43) Date of publication:
25.11.2020 Bulletin 2020/48

(21) Application number: 19176470.3

(22) Date of filing: 24.05.2019

(51) Int Cl.:
*C08L 67/02* (2006.01) *C08L 63/00* (2006.01)
*C08L 23/06* (2006.01) *C08K 5/5313* (2006.01)
*C08K 7/14* (2006.01) *C08G 59/42* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SABIC Global Technologies B.V.**
**4612 PX Bergen op Zoom (NL)**

(72) Inventors:
- **SCHWARTZ, Erik**
  **4612 PX Bergen op Zoom (NL)**
- **TER HORST, Sascha Jan**
  **4612 PX Bergen op Zoom (NL)**

(74) Representative: **Elzaburu S.L.P.**
**Miguel Angel 21, 2nd floor**
**28010 Madrid (ES)**

(54) **POLYMER COMPOSITIONS WITH LOW WARPAGE**

(57) Provided are compositions comprising: an epoxy component, a polyester polymer component, a polyalkylene polymer component, a Lewis acid, and a glass fiber filler. A molded planar sample of the composition exhibits less warpage from a horizontal plane when viewed than the warpage of a substantially identical composition in the absence of the glass fiber filler or epoxy component.

EP 3 741 807 A1

## Description

### TECHNICAL FIELD

The present disclosure relates to compositions having reduced warpage.

### BACKGROUND

Warpage may be defined as a dimensional distortion in a molded product after it is ejected from a mold after a suitable molding process. With an increasing focus on thin-walled products, control over the dimensional stability is increasingly important. Although additives may be added to a material in order to decrease warpage, shrinkage and consequently warpage, are most often-controlled by process conditions. For the processing of certain types of molded products, the material may significantly affect dimensional distortion as well. For example, thin-walled products typically require a material that has a good flow. However, low flow or stiffer materials may be advantageous as it may improve the physical and mechanical properties of the molded part. As a disadvantage, stiffer materials may be more difficult to force into a mold, which may result in the material solidifying before full packing takes place. Consequently, the molecules will be left to shrink at different rates and warpage will occur.

There remains, however, a need in the art for reduced dimensional distortion in articles formed from polymers with good flow and other desirable physical properties.

### SUMMARY

The present disclosure addresses the need in the art for compositions that exhibit improved dimensional distortion. The present disclosure relates to a composition comprising: an epoxy component having at least two functional groups; a polyester polymer component; a polyalkylene polymer component; and a glass fiber filler, wherein a molded planar sample of the composition exhibits less warpage from a horizontal plane when viewed than the warpage of a substantially identical composition in the absence of the glass fiber filler or epoxy component.

The present disclosure also provides articles formed from the described compositions. Further provided are methods of forming an article, comprising a dynamic cross-linked polymer composition comprising preparing a dynamic cross-linked polymer composition and subjecting the dynamic cross-linked polymer composition to a conventional polymer forming process, such as compression molding, profile extrusion, injection molding, or blow molding to form the article, such that the polymer composition exhibits reduced warpage.

The above described and other features are exemplified by the following drawings, detailed description, examples, and claims.

### BRIEF DESCRIPTION OF THE DRAWINGS

The following is a brief description of the drawings wherein like elements are numbered alike and which are exemplary of the various aspects described herein.

FIG. 1 depicts the storage (solid line) and loss (dashed line) modulus of the oscillatory time sweep measurement curves for a cross-linked polymer network.

FIG. 2 depicts the normalized modulus (G/Go) for the dynamically cross-linked polymer network (solid line), as well as a line representing the absence of stress relaxation in a conventionally cross-linked polymer network (dashed line, fictive data).

FIG. 3 depicts, in a qualitative fashion, the storage modulus qualities of DCN (curves B and C) and non-DCN (curve A) materials.

FIG. 4 depicts images of molded disks and visible warpage for examples CE1 through E8.

FIG. 5 shows warpage of sample E9 (right) compared to sample E10 (left).

FIG. 6 shows warpage of sample E10 (right) compared to sample E4 (left).

FIG. 7 shows warpage of sample E11 (left) compared to sample E4 (right)

FIG. 8 shows warpage of sample E9 at different processing conditions; cylinder temperature 250 °C and molding temperature 65 °C (left); and cylinder temperature 260 °C and molding temperature 80 °C (right).

FIG. 9 shows warpage of sample E12 (left) compared to sample E4 (right).

FIG. 10 shows warpage of sample E13 (left) compared to sample E4 (right)

FIG. 11 shows warpage of sample E14 (left) compared to sample E4 (right)

FIG. 12 shows absolute average warpage of samples CE1, E2, E3, E4, E7 and E8.

FIG. 13 shows absolute average warpage of samples E9, E10, and E11 compared to E4.

FIG. 14 shows absolute average warpage of samples CE1, E2, E3, E4, E7 and E8 after annealing or after molding.
FIG. 15 shows absolute average warpage of samples CE1, E2, E3, E4, E7 and E8 after annealing or after molding or after curing.

DETAILED DESCRIPTION OF ILLUSTRATIVE ASPECTS

The present disclosure may be understood more readily by reference to the following detailed description of desired aspects and the examples included therein. In the following specification and the claims that follow, reference will be made to a number of terms that have the following meanings.

To control or fix the warpage typically processing parameters are changed, the part designed is changed or a different plastic materials selection is made. For example, increasing resin temperature and tool temperature typically can lead to a decrease in warpage. To achieve good dimensional stability (low warpage) with highly filled materials is a challenge. Typically, glass (fiber) filled systems give good mechanical properties but higher warpage and a less smooth surface. Milled glass, mica, or glass flakes may lower warpage, improve dimensional stability, and give a better surface smoothness, but the mechanical properties may be reduced. Another possible way to improve the dimensional stability is by making use of so-called flat glass, which has as a non-circular cross section. Flat glass fiber has also been known to improve warpage. The present disclosure addresses the need in the art for compositions that exhibit improved dimensional distortion, in particularly in dynamically, or pre-dynamically cross-linked, network compositions. The present disclosure provides that a unique combination of flat glass fiber and epoxy to further decrease warpage of highly filled materials (that is, materials having a filler content of 20% to 50%. The present disclosure provides polyester based materials for low warpage applications formed by compounding a PBT with an epoxide and combining with a flat glass fiber.

Described herein, *inter alia,* are methods of making compositions, i.e., pre-dynamic and dynamic cross-linked polymer compositions. These compositions are advantageous because they can be prepared more readily than dynamic cross-linked or cross-linkable polymer compositions previously described in the art.

***Polyester Component***

Present in the compositions described herein are polymers that have ester linkages, i.e., polyesters. The polymer can be a polyester that includes ester linkages between monomers. The polymer can also be a copolyester, which is a copolymer comprising ester and other linkages and.

The polymer having ester linkages may be a polyalkylene terephthalate, for example, poly(butylene terephthalate), also known as PBT, which has the structure shown below:

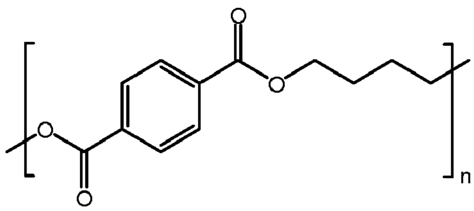

where n is the degree of polymerization, and can have a value as high as 1,000. The polymer may have a weight average molecular weight of up to 100,000 grams per mol (g/mol).

The polymer having ester linkages may be an oligomer containing ethylene terephthalate, described herein as an ET-oligomer, which has the structure shown below:

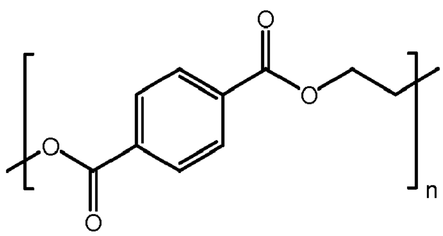

where n is the degree of polymerization, and can have a value up to 1000. The ethylene terephthalate oligomer may have an intrinsic viscosity between 0.09 dl/g and 0.35 dl/g

The polymer having ester linkages can be PCTG, which refers to poly(cyclohexylenedimethylene terephthalate),

glycol-modified. This is a copolymer formed from 1,4-cyclohexanedimethanol (CHDM), ethylene glycol, and terephthalic acid. The two diols react with the diacid to form a copolyester. The resulting copolyester has the structure shown below:

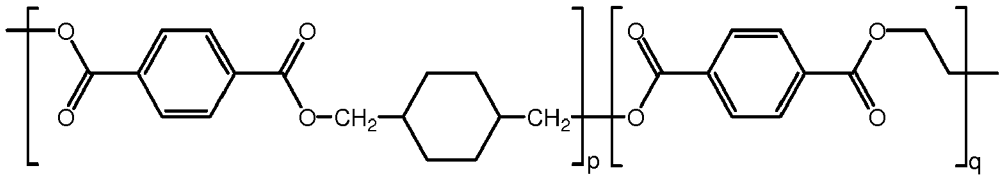

where p is the molar percentage of repeating units derived from CHDM, q is the molar percentage of repeating units derived from ethylene glycol, and p>q, and the polymer may have a weight average molecular weight of up to 100,000.

The polyester having ester linkages can also be ETG polyester. ETG-oligomer has the same structure as CTG-oligomer, except that the ethylene glycol is 50 mole% or more of the diol content. ETG polyester is an abbreviation for a polyester containing ethylene terephthalate, glycol-modified. In some aspects, the polymer having ester linkages can be poly(1,4-cyclohexane-dimethanol-1,4-cyclohexanedicarboxylate), i.e. PCCD, which is a polyester formed from the reaction of CHDM with dimethyl cyclohexane-1,4-dicarboxylate. PCCD has the structure shown below:

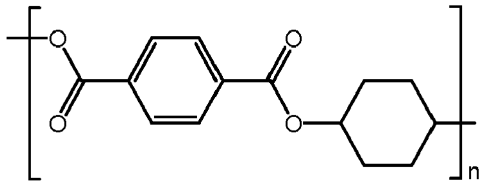

where n is the degree of polymerization, and can be as high as 1,000, and the polymer may have a weight average molecular weight of up to 100,000 g/mol.

The polymer having ester linkages can be poly(ethylene naphthalate), also known as PEN, which has the structure shown below:

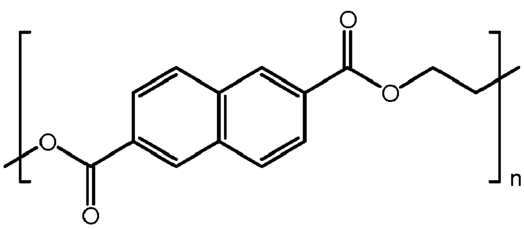

where n is the degree of polymerization, and can be as high as 1,000, and the polymer may have a weight average molecular weight of up to 100,000 g/mol.

The polymer having ester linkages can also be a copolyestercarbonate. A copolyestercarbonate contains two sets of repeating units, one having carbonate linkages and the other having ester linkages. This is illustrated in the structure below:

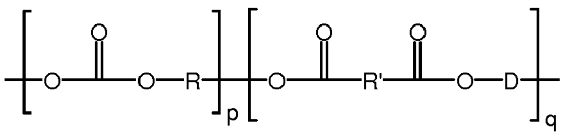

where p is the molar percentage of repeating units having carbonate linkages, q is the molar percentage of repeating units having ester linkages, and p+q=100%; and R, R', and D are independently divalent radicals.

The divalent radicals R, R' and D can be made from any combination of aliphatic or aromatic radicals, and can also contain other heteroatoms, such as for example oxygen, sulfur, or halogen. R and D are generally derived from dihydroxy compounds, such as the bisphenols of Formula (A). In particular aspects, R is derived from bisphenol-A. R' is generally derived from a dicarboxylic acid. Exemplary dicarboxylic acids include isophthalic acid, terephthalic acid. 1,2-di(p-carboxyphenyl)ethane, 4,4'-dicarboxydiphenyl ether, 4,4'-bisbenzoic acid, 1,4-, 1,5-, or 2,6-naphthalenedicarboxylic acids, and cyclohexane dicarboxylic acid. As additional examples, the repeating unit having ester linkages could be butylene terephthalate, ethylene terephthalate, PCCD, or ethylene naphthalate as depicted above.

Aliphatic polyesters can also be used. Examples of aliphatic polyesters include polyesters having repeating units of the following formula:

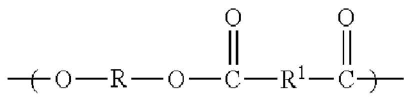

where at least one R or $R^1$ is an alkyl-containing radical. They are prepared from the polycondensation of glycol and aliphatic dicarboxylic acids.

By using an equimolar ratio between the hydroxyl/epoxy groups of the epoxy-containing component and the ester groups of the polymer having ester linkages, a moderately cross-linked polyhydroxy ester network can be obtained. The following conditions are generally sufficient to obtain a three-dimensional network:

$$N_A < N_O + 2N_X$$

$$N_A > N_X$$

wherein $N_O$ denotes the number of moles of hydroxyl groups; $N_X$ denotes the number of moles of epoxy groups; and $N_A$ denotes the number of moles of ester groups.

With the coupler component comprising at least two epoxy groups, the mole ratio of hydroxyl/epoxy groups (from the coupler epoxy-containing component) to the ester groups (from the polymer having ester linkages or the polyester component) in the system is generally from about 1:100 to about 5 to 100.

The pre-dynamic cross-linked polymer compositions of the present disclosure include a polyester component, e.g., an ester oligomer or polybutylene terephthalate (PBT). The polyester component may be present at, e.g., from about 10 wt. % to about 95 wt. % measured against the total weight of the pre-dynamic cross-linked composition.

***Epoxy Component***

The compositions of the present disclosure suitably include a coupler component, such as an epoxy. In various aspects, the coupler component may function as chain extender or a cross-linking agent. As provided above, the coupler component may comprise an epoxy. In specific aspects, the coupler component may comprise an epoxying having at least two functional groups.

The epoxy-containing component can be a monomer, an oligomer, or a polymer. Generally, the epoxy-containing component has at least two epoxy groups, and can also include other functional groups as desired, for example, hydroxyl (-OH). Glycidyl epoxy resins are a particularly preferred epoxy-containing component. AN exemplary glycidyl epoxy ether is bisphenol diglycidyl ether (BADGE), which can be considered a monomer, oligomer or polymer, and is shown below as Formula (A).

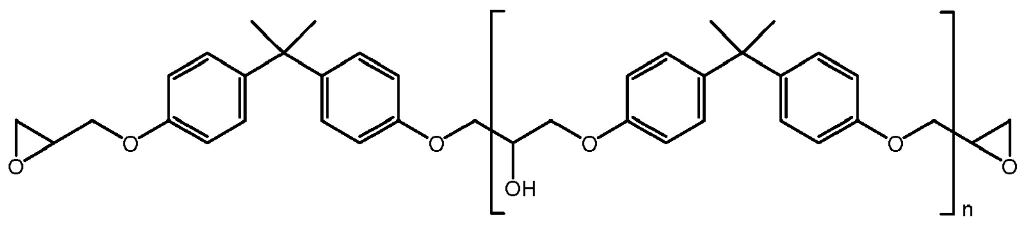

**(A)**

The value of n can be from 0 to about 25 in Formula (A). When n=0, this is a monomer. When n=1 to 7, this is an oligomer. When n=8 to about 25, this is a polymer. BADGE-based resins have excellent electrical properties, low shrinkage, good adhesion to numerous metals, good moisture resistance, good heat resistance and good resistance to mechanical impacts. BADGE oligomers (where n=1 or 2) are commercially available as D.E.R. 671 from Dow, which has an epoxide equivalent of 475-550 grams/equivalent, 7.8-9.4 % epoxide, 1820-2110 mmol of epoxide/kilogram, a melt viscosity at 150°C of 400-950 millipascals per second (mPa·sec), and a softening point of 75-85°C.

Novolac resins can be used. These epoxy resins are obtained by reacting phenol with formaldehyde in the presence of an acid catalyst to produce a novolac phenolic resin, followed by a reaction with epichlorohydrin in the

presence of sodium hydroxide as catalyst. Epoxy resins are illustrated as Formula (B):

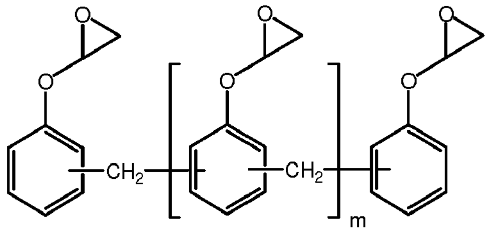

(B)

wherein m is a value from 0 to about 25.

Another useful epoxide is depicted in Formula (C) a cycloaliphatic epoxy (ERL).

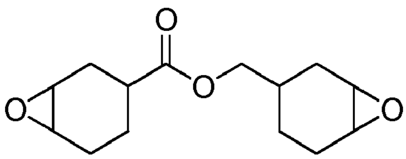

(C)

For a monomeric bisphenol A epoxy, the value of n is 0 in Formula (A). When n=0, this is a monomer. BADGE-based resins have excellent electrical properties, low shrinkage, good adhesion to numerous metals, good moisture resistance, good heat resistance and good resistance to mechanical impacts. In some aspects of the present disclosure, the BADGE has a molecular weight of about 1000 Daltons and an epoxy equivalent of about 530 g per equivalent. As used herein, the epoxy equivalent is an expression of the epoxide content of a given compound. The epoxy equivalent is the number of epoxide equivalents in 1 g of resin (eq./g).

Exemplary coupler epoxy components of the present disclosure include monomeric epoxy compounds which generate a primary alcohol. In the presence of a suitable catalyst, the generated primary alcohol can readily undergo transesterification. As an example, and not to be limiting, exemplary epoxy components that generate a primary alcohol include certain cyclic epoxies. Exemplary cyclic epoxies that generate a primary alcohol in the presence of a suitable catalyst have a structure according to Formula D.

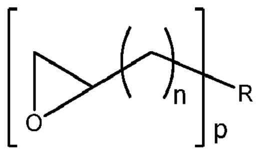

**Formula D**

where n is greater than or equal to 1 and R can be any chemical group (including, but not limited to, ether, ester, phenyl, alkyl, alkynyl, etc.). In preferred aspects of the present disclosure, p is greater than or equal to 2 such that there are at least 2 of the epoxy structural groups present in the chain extender molecular. BADGE is an exemplary epoxy chain extender where R is bisphenol A, n is 1, and p is 2.

Another useful epoxide is ARALDITE PT910, which is a mixture of bifunctional and trifunctional aromatic glycidyl esters depicted in Formulas (D1 and (D2).

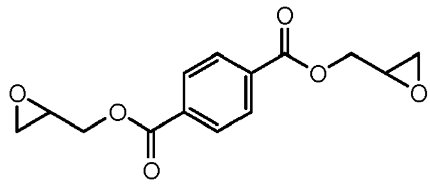

(D1)

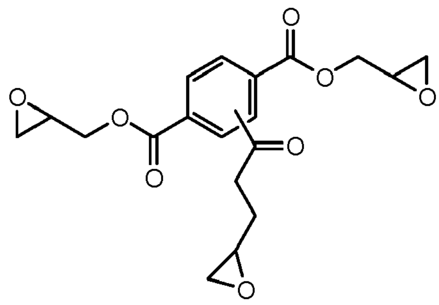

(D2)

Other exemplary monomeric epoxy compounds include diglycidyl benzenedicarboxylate (Formula E) and triglycidyl benzene tricarboxylate (Formula F).

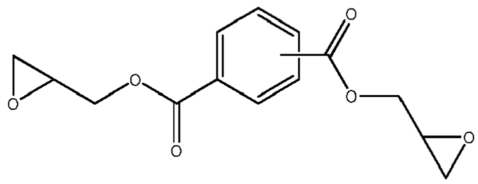

**Formula E**

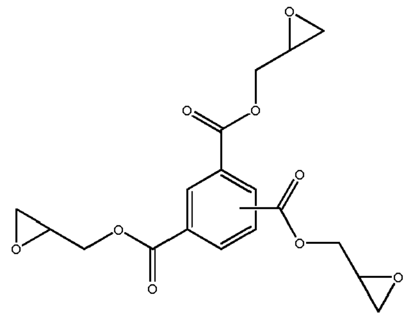

**Formula F**

An epoxidized styrene-acrylic copolymer, CESA, represents a further epoxy component. CESA is a copolymer of styrene, methyl methacrylate, and glycidyl methacrylate.

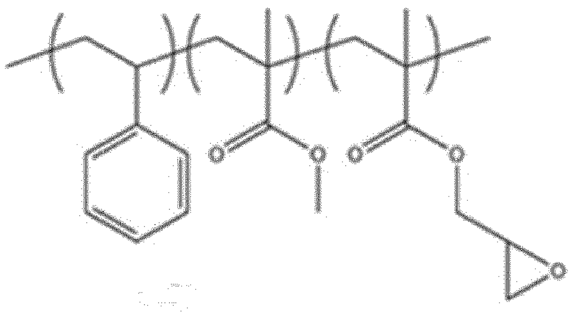

CESA according to the methods of the present disclosure may have average molecular weight of about 6800 g/mol and an epoxy equivalent of 280 g/mol. As used herein, the epoxy equivalent is an expression of the epoxide content of a given compound. The epoxy equivalent is the number of epoxide equivalents in 1 kg of resin (eq./g).

The epoxy component may be present as a percentage of the total weight of the composition. In some aspects, the epoxy component comprising at least two functional networking groups may be present in an amount of up to about 20 wt. %, or from 1 wt. % to about 15 wt. %. For example, the epoxy component may be present in an amount of about 1, 2, 3, 4, 5, 6, 7, 8, 9, or about 10 wt.%. In one aspect, the coupler component may be present in an amount of about 12.5 wt. %.

***Flat Glass Fiber***

The disclosed compositions may comprise a flat glass fiber. It is known that flat glass fibers may provide improved warpage in certain polymer composition blends. The disclosed compositions provide further improved warpage by combining a polyester and glass fiber with an epoxy component and Lewis acid additive in certain examples.

Glass fibers having a length of about 0.4 mm (millimeter) or longer are referred to long fibers, and fibers shorter

than this are referred to as short fibers. A glass fiber may be referred to as "flat" given the non-circular shape of its cross-section. In various aspects of the present disclosure the disclosed flat glass fiber may have a flat ratio of 4. That is, a ratio of length to width of the glass fiber may be 4:1 or about 4:1. As a comparison, a conventional round glass fiber may have a flat ratio of 1 because the ratio of any measurement of the round cross-section of the round glass fiber would be 1 or about 1. In one example, the flat glass fiber may have a length of 28 $\mu$m and a width of 7 $\mu$m, which corresponds to a length to width ratio of 4:1. The disclosed flat glass fibers may have a length of about 0.4 mm in an example.

The flat glass fibers used in select aspects of this disclosure may be surface-treated with a surface treatment agent containing a coupling agent to improve adhesion to the resin base. Suitable coupling agents can include, but are not limited to, silane-based coupling agents, titanate-based coupling agents or a mixture thereof. Applicable silane-based coupling agents include aminosilane, epoxysilane, amidesilane, azidesilane and acrylsilane. Organo metallic coupling agents, for example, titanium or zirconium-based organo metallic compounds, may also be used.

In exemplary aspects, the glass fiber used in the present disclosure may be selected from E-glass, S-glass, AR-glass, T-glass, D-glass R-glass, and combinations thereof. As an example, the glass fiber can be an "E" glass type which is a class of fibrous glass filaments included of lime-alumino-borosilicate glass.

As noted herein, in certain examples the polymer composition disclosed herein includes from 5 wt. % to 70 wt. %, or from about 5 wt. % to about 65 wt. %, or from 10 wt. % to 65 wt. %, or from about 10 wt. % to about 65 wt. % flat glass fiber. In other examples, the resin composite includes from 10 wt. % to 50 wt. %, or from about 10 wt. % to about 50 wt. % long glass fiber, or 10 wt. % to 40 wt. %, from about 10 wt. % to about 40 wt. % long, or from 10 wt. % to 30 wt. %, about 10 wt. % to about 30 wt. % long, or even from 10 wt. % to 20 wt. %, or from about 10 wt. % to about 20 wt. % long glass fiber.

In various aspects, the disclosed composition may comprise long glass fiber in a suitable polymer resin. For example, the composition may comprise polybutylene terephthalate (PBT) VERTON™ with long glass fiber present in an amount of from 10 wt. % to 50 wt%. Other suitable resins may comprise polythalamide (PPA), polyamide (PA), and polypropylene (PP), among other resins.

***Polyalkylene polymer***

The disclosed compositions exhibiting reduced warpage may comprise a polyalkylene polymer. A polyalkylene polymer may refer to a species or compound that may accept an electron pair from a donor compound. As an example, the polyalkylene polymer may impart mold release properties to the polymer composition

In some examples, the composition may comprise a polyalkylene polymer such as a polyethylene polymer. In one example, the polyalkylene polymer comprises a milled polyethylene.

As noted herein, in certain examples the composition disclosed herein includes from 0.01 wt. % to 10 wt. %, or from about 0.01 wt. % to about 10 wt. %, or from 0.01 wt. % to 8 wt. %, or from about 0.01 wt. % to about 8 wt. % of a polyalkylene polymer. In other examples, the resin composite includes from 0.01 wt. % to 6 wt. %, or from about 0.01 wt. % to about 6 wt. % polyalkylene polymer, or 0.01 wt. % to 5 wt. %, from about 0.01 wt. % to about 5 wt. % of a polyalkylene polymer, or from 0.01 wt. % to 3 wt. %, about 0.01 wt. % to about 3 wt. % polyalkylene polymer, or even from 0.01 wt. % to 2 wt. %, or from about 0.01 wt. % to about 2 wt. % polyalkylene polymer. In a specific example, the polyalkylene polymer may be present in an amount from about 0.01 wt. % to about 1.5 wt. %.

***Lewis Acid***

The disclosed compositions exhibiting reduced warpage may comprise a Lewis acid. A Lewis acid may refer to a species or compound that may accept an electron pair from a donor compound. Lewis acid can be halides of the higher oxidation states of metals, such as aluminum chloride $AlCl_3$, titanium tetrachloride $TiCl_4$, boron trifluoride $BF_3$, zinc chloride $ZnCl_2$.The Lewis acid may facilitate cross-linking of the composition. The Lewis acid may also promote a transesterification polycondensation reactions Lewis acid type additives that maybe be used include, but are not limited to , metal oxides such as zinc oxide, antimony oxide, and indium oxide; metal alkoxides such as titanium tetrabutoxide, titanium propoxide, titanium isopropoxide, titanium ethoxide, zirconium alkoxides, niobium alkoxides, tantalum alkoxides; alkali metals; alkaline earth metals, rare earth alcoholates and metal hydroxides, for example sodium alcoholate, sodium methoxide, potassium alkoxide, and lithium alkoxide; sulfonic acids such as sulfuric acid, methane sulfonic acid, paratoluene sulfonic acid; phosphines such as triphenylphosphine, dimethylphenylphosphine, methyldiphenylphosphine, triterbutylphosphine; and phosphazenes.

In various examples, the composition may comprise a Lewis acid such as a phosphinate. An example of a phosphinate comprises an aluminum phosphinate such as Exolit™ OP 1240. Exolit™ OP 1240 may have a phosphorous content of about 20 % (w/w) or about 23 - 24 % (w/w).

As noted herein, in certain examples the composition disclosed herein includes from 0.01 wt. % to 10 wt. %, or from about 0.01 wt. % to about 10 wt. %, or from 0.01 wt. % to 8 wt. %, or from about 0.01 wt. % to about 8 wt. % of

a Lewis acid. In other examples, the resin composite includes from 0.01 wt. % to 6 wt. %, or from about 0.01 wt. % to about 6 wt. % Lewis acid, or 0.01 wt. % to 5 wt. %, from about 0.01 wt. % to about 5 wt. % of a Lewis acid, or from 0.01 wt. % to 3 wt. %, about 0.01 wt. % to about 3 wt. % Lewis acid, or even from 0.01 wt. % to 2 wt. %, or from about 0.01 wt. % to about 2 wt. % Lewis acid.

As noted herein, in certain examples the composition disclosed herein includes from 0.01 wt. % to 10 wt. %, or from about 0.01 wt. % to about 10 wt. %, or from 0.01 wt. % to 8 wt. %, or from about 0.01 wt. % to about 8 wt. % of a phosphinate additive. In other examples, the resin composite includes from 0.01 wt. % to 6 wt. %, or from about 0.01 wt. % to about 6 wt. % phosphinate additive, or 0.01 wt. % to 5 wt. %, from about 0.01 wt. % to about 5 wt. % of a Lewis acid, or from 0.01 wt. % to 3 wt. %, about 0.01 wt. % to about 3 wt. % phosphinate additive, or even from 0.01 wt. % to 2 wt. %, or from about 0.01 wt. % to about 2 wt. % phosphinate additive.

It is noted however that where the composition comprises an aluminum phosphinate such as Exolit™ OP 1240 as a phosphinate additive or a Lewis acid, certain properties may be affected depending on the amount of the Lewis acid or phosphinate. For example, aluminum phosphinates, such as Exolit™ OP 1240, may be used in certain compositions in the art in amounts greater than about 8 wt. % to impart flame retardant properties. In PBT, a dosage of 20 % (by wt.) Exolit OP 1240 is usually sufficient to obtain the UL 94 V-0 classification for electrical components (at 1.6 as well as 0.8 mm thicknesses). In PET, less than 15 % are required to pass UL 94 V-0. Examples of the present disclosure however include a phosphinate in amounts less than 5 wt. %, less than 3 wt. %, less than 2 wt. %, or less than 1 wt. %. Higher amounts of the phosphinate additive such Exolit™ OP 1240 may result in excessive and/or premature cross-linking of the polymer composition. Excessive and/or premature cross-linking of the polymer composition may prevent proper processing or molding conditions.

***Other Additives***

One or more additives may be combined with the components of the dynamic or pre-dynamic cross-linked polymer to impart certain properties to the polymer composition. Exemplary additives include: one or more polymers, ultraviolet agents, ultraviolet stabilizers, heat stabilizers, antistatic agents, anti-microbial agents, anti-drip agents, radiation stabilizers, pigments, dyes, fibers, fillers, plasticizers, fibers, non-networking flame retardants, antioxidants, lubricants, impact modifiers, wood, glass, and metals, and combinations thereof.

The compositions described herein may comprise an ultraviolet (UV) stabilizer for dispersing UV radiation energy. The UV stabilizer does not substantially hinder or prevent cross-linking of the various components of the compositions described herein. UV stabilizers may be hydroxybenzophenones, hydroxyphenyl benzotriazoles, cyanoacrylates, oxanilides, or hydroxyphenyl triazines. The compositions described herein may comprise heat stabilizers. Exemplary heat stabilizer additives include, for example, organophosphites such as triphenyl phosphite, tris-(2,6-dimethylphenyl)phosphite, tris-(mixed mono-and di-nonylphenyl)phosphite or the like; phosphonates such as dimethylbenzene phosphonate or the like; phosphates such as trimethyl phosphate, or the like; or combinations thereof.

The compositions described herein may comprise an antistatic agent. Examples of monomeric antistatic agents may include glycerol monostearate, glycerol distearate, glycerol tristearate, ethoxylated amines, primary, secondary and tertiary amines, ethoxylated alcohols, alkyl sulfates, alkylarylsulfates, alkylphosphates, alkylaminesulfates, alkyl sulfonate salts such as sodium stearyl sulfonate, sodium dodecylbenzenesulfonate or the like, quaternary ammonium salts, quaternary ammonium resins, imidazoline derivatives, sorbitan esters, ethanolamides, betaines, or the like, or combinations comprising at least one of the foregoing monomeric antistatic agents.

The compositions described herein may comprise anti-drip agents. The anti-drip agent may be a fibril forming or non-fibril forming fluoropolymer such as polytetrafluoroethylene (PTFE). The anti-drip agent can be encapsulated by a rigid copolymer as described above, for example styrene-acrylonitrile copolymer (SAN). PTFE encapsulated in SAN is known as TSAN. Encapsulated fluoropolymers can be made by polymerizing the encapsulating polymer in the presence of the fluoropolymer, for example an aqueous dispersion. TSAN can provide significant advantages over PTFE, in that TSAN can be more readily dispersed in the composition. An exemplary TSAN can comprise 50 wt % PTFE and 50 wt % SAN, based on the total weight of the encapsulated fluoropolymer. The SAN can comprise, for example, 75 wt % styrene and 25 wt % acrylonitrile based on the total weight of the copolymer. A SAN may comprise, e.g., from 50-99 wt% styrene, and from about 1 to about 50 wt% acrylonitrile, including all intermediate values. Alternatively, the fluoropolymer can be pre-blended in some manner with a second polymer, such as for, example, an aromatic polycarbonate or SAN to form an agglomerated material for use as an anti-drip agent. Either method can be used to produce an encapsulated fluoropolymer.

In addition to flat glass fibers disclosed herein, exemplary fibers may include carbon fibers, polyester fibers, polyamide fibers, aramid fibers, cellulose and nanocellulose fibers or plant fibers (linseed, hemp, sisal, bamboo, etc.) may also be envisaged. In some examples, the disclosed composition may have a filler content of at least 30 wt. %.

Suitable fillers for the compositions described herein include: silica, clays, calcium carbonate, carbon black, kaolin, and whiskers. Other possible fillers include, for example, silicates and silica powders such as aluminum silicate

(mullite), synthetic calcium silicate, zirconium silicate, fused silica, crystalline silica graphite, natural silica sand, or the like; boron powders such as boron-nitride powder, boron-silicate powders, or the like; oxides such as TiO2, aluminum oxide, magnesium oxide, or the like; calcium sulfate (as its anhydride, dihydrate or trihydrate); calcium carbonates such as chalk, limestone, marble, synthetic precipitated calcium carbonates, or the like; talc, including fibrous, modular, needle shaped, lamellar talc, or the like; wollastonite; surface-treated wollastonite; glass spheres such as hollow and solid glass spheres, silicate spheres, cenospheres, aluminosilicate (armospheres), or the like; kaolin, including hard kaolin, soft kaolin, calcined kaolin, kaolin comprising various coatings known in the art to facilitate compatibility with the polymeric matrix, or the like; single crystal fibers or "whiskers" such as silicon carbide, alumina, boron carbide, iron, nickel, copper, or the like; fibers (including continuous and chopped fibers) such as asbestos, carbon fibers, sulfides such as molybdenum sulfide, zinc sulfide or the like; barium compounds such as barium titanate, barium ferrite, barium sulfate, heavy spar, or the like; metals and metal oxides such as particulate or fibrous aluminum, bronze, zinc, copper and nickel or the like; flaked fillers such as glass flakes, flaked silicon carbide, aluminum diboride, aluminum flakes, steel flakes or the like; fibrous fillers, for example short inorganic fibers such as those derived from blends comprising at least one of aluminum silicates, aluminum oxides, magnesium oxides, and calcium sulfate hemihydrate or the like; natural fillers and reinforcements, such as wood flour obtained by pulverizing wood, fibrous products such as cellulose, cotton, sisal, jute, starch, cork flour, lignin, ground nut shells, corn, rice grain husks or the like; organic fillers such as polytetrafluoroethylene; reinforcing organic fibrous fillers formed from organic polymers capable of forming fibers such as poly(ether ketone), polyimide, polybenzoxazole, poly(phenylene sulfide), polyesters, polyethylene, aromatic polyamides, aromatic polyimides, polyetherimides, polytetrafluoroethylene, acrylic resins, poly(vinyl alcohol) or the like; as well as additional fillers and reinforcing agents such as mica, clay, feldspar, flue dust, fillite, quartz, quartzite, perlite, tripoli, diatomaceous earth, carbon black, or the like, or combinations comprising at least one of the foregoing fillers or reinforcing agents.

Plasticizers, lubricants, and mold release agents can be included. Mold release agent (MRA) allows the material to be removed quickly and effectively. Mold releases can reduce cycle times, defects, and browning of finished product. There is a considerable overlap among these types of materials, which may include, for example, phthalic acid esters; tristearin; di- or polyfunctional aromatic phosphates; poly-alpha-olefins; epoxidized soybean oil; silicones, including silicone oils; esters, for example, fatty acid esters such as alkyl stearyl esters, e.g., methyl stearate, stearyl stearate, pentaerythritol tetrastearate (PETS), and the like; combinations of methyl stearate and hydrophilic and hydrophobic nonionic surfactants comprising polyethylene glycol polymers, polypropylene glycol polymers, poly(ethylene glycol-co-propylene glycol) copolymers, or a combination comprising at least one of the foregoing glycol polymers, e.g., methyl stearate and polyethylene-polypropylene glycol copolymer in a suitable solvent; waxes such as beeswax, montan wax, paraffin wax, or the like.

Exemplary antioxidant additives include organophosphites such as tris(nonyl phenyl)phosphite, tris(2,4-di-t-butylphenyl)phosphite ("IRGAFOS™ 168" or "1-168"), bis(2,4-di-t-butylphenyl)pentaerythritol diphosphite, distearyl pentaerythritol diphosphite, tris(dialkylaryl)phosphite, e.g., tris(di-t-butylphenyl)phosphite or tris(di-t-amylphenyl)phosphite, and the bis(dialkylaryl)monoalkylaryl phosphite, e.g., bis(di-t-butylphenyl)mono-t-butylphenyl phosphite or bis(di-t-amylphenyl)mono-t-amylphenyl phosphite, or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations comprising at least one of the foregoing antioxidants.

## Processes and Articles

As provided herein, a method of preparing a polymer composition may comprise reacting an epoxy component having at least two functional groups, a Lewis acid, a polyester component, and a polyalkylene component at a temperature and for a time sufficient to form a first composition; and combining the first composition with a filler to provide a filled composition, wherein a molded planar sample of the filled composition exhibits less warpage from a horizontal plane when viewed than the warpage of a substantially identical composition in the absence of the glass fiber filler or epoxy component.

In one approach for combining the epoxy component, the polyester component, the Lewis acid additive, and the one or more catalysts is to use an extruder apparatus, for example, a single screw or twin screw extruding apparatus. In a specific example, the foregoing components may be compounded. The reaction may be performed in a reactor vessel (stirred or otherwise) and may also be performed as a reactive extrusion. The flat glass fiber filler may be introduced downstream during extrusion.

In certain aspects, the reacting may occur for less than about 7 minutes so as to form the composition. In other aspects, the reacting occurs for less than about 4 minutes. In yet other aspects, the reaction occurs for less than about 2.5 minutes. In still other aspects, the reacting occurs for between about 10 minutes and about 15 minutes. In some aspects, the reacting occurs at temperatures of up to about 320 °C to form the pre-dynamic cross-linked polymer composition. In yet other aspects, the reacting may occur at temperatures between about 40 °C and about 320 °C. In other aspects, the reacting occurs at temperatures between about 40 °C and about 290 °C. In some aspects, the reacting occurs at temperatures between about 40 °C and about 280 °C. In some aspects, the reacting occurs at temperatures of between about 40 °C and about 270 °C. In still other aspects, the reacting occurs at temperatures of between about 70 °C and about 270 °C. In other aspects, the combining step occurs at temperatures between about 70 °C and about 240 °C. In still other aspects, the reacting occurs at temperatures between about 190 °C and about 270 °C.

The reaction may occur at a temperature that is less than the temperature of degradation of the chain or polyester component. That is, the reacting may occur at a temperature at which the polyester component is in a melted state. As one example, the reaction occurs at a temperature less than or about equal to the $T_m$ of the respective polyester. In one example, where the polyester component is PBT, the reacting step may occur at about 240 °C to 260 °C, below the degradation temperature of PBT.

The reacting step so as to form the composition can be achieved using any means known in the art, for example, mixing, including screw mixing, blending, stirring, shaking, and the like. The methods described herein may be carried out under ambient atmospheric conditions, but it is preferred that the methods be carried out under an inert atmosphere, for example, a nitrogen atmosphere. In a certain aspect, the methods may be carried out under conditions that reduce the amount of moisture in the compositions described herein. For example, the composition described herein may have less than about 3.0 wt.%, less than about 2.5 wt.%, less than about 2.0 wt.%, less than about 1.5 wt.%, or less than about 1.0 wt.% of water (i.e., moisture), based on the weight of the pre-dynamic cross-linked polymer composition.

The disclosed compositions may be subjected to an annealing process to relieve internal stresses of a molded part formed from the composition during fabrication. Annealing may comprise heating for two hours at a temperature of about 120 °C. Annealed compositions similarly exhibit the improved warpage described herein.

In some aspects of the present disclosure, the disclosed compositions may be further processed to form dynamically cross-linked polymer compositions.

The compositions of the present disclosure may provide dynamically cross-linked compositions exhibiting the characteristic stress relaxation behavior associated with the formation of a dynamic network.

In certain aspects of the present disclosure, to achieve a fully cured, dynamic cross-linked composition, pre-dynamic cross-linked polymer compositions prepared herein undergo a post-curing step. The post-curing step may include heating the obtained composition to elevated temperatures for a prolonged period. The composition may be heated to a temperature just below its melt or deformation temperature. Heating to just below the melt or deformation temperature of the polyester component may activate the dynamically cross-linked network, thereby, curing the composition to a dynamic cross-linked polymer composition. Further processing may comprise a curing process to induce said dynamic cross-linking. Examples of curing processes may include heating the composition at a temperature of at least about 200 °C for at least about 4 hours. However, it is noted that curing processes may vary according to temperature and duration.

As described herein, the composition may be subjected to a curing process to provide a dynamic cross-linked polymer composition. The curing process may comprise heating the composition to a temperature between about 170 °C to about 250 °C. The composition may be heated for up to about 8 hours.

The pre-dynamic and dynamic cross-linked polymer compositions described herein can be used in conventional polymer forming processes such as injection molding, compression molding, profile extrusion, and blow molding. For example, the dynamic cross-linked polymer compositions prepared according to the described methods can be melted and then injected into a mold to form an injection-molded article. The injection-molded article can then be cured by heating to temperatures of up to about 270 °C, followed by cooling to ambient temperature. As an example, articles may be formed from the dynamic cross-linked polymer compositions of the present disclosure and may include composites, a thermoformed material, or a combination thereof.

Alternatively, the compositions described herein can be melted, subjected to compression molding processes, and then cured. In other aspects, the pre-dynamic cross-linked polymer compositions described herein can be melted, subjected to profile extrusion processes, and then cured.

Articles can be formed from the compositions described herein. Generally, the epoxy component, the carboxylic acid component/polyester components, and the transesterification catalyst are mixed to form the compositions described herein. The compositions described herein can then formed, shaped, molded, or extruded into a desired shape. Energy is subsequently applied to cure the compositions described herein to form the dynamic cross-linked polymer compositions of the disclosure. For example, the compositions can be heated to a temperature of from 50 °C to 250 °C to effect curing. The cooling of the hardened compositions is usually performed by leaving the material to return to room temperature, with or without use of a cooling means. This process is advantageously performed in conditions such that the gel point

is reached or exceeded by the time the cooling is completed. More specifically, sufficient energy should be applied during hardening for the gel point of the resin to be reached or exceeded.

In some aspects, the components can be combined, extruded, and then cured during injection molding. In further aspects, the components can be combined, then extruded, then injection molded at a relatively lower temperatures and shorter cycle time so as not to induce cross-linking, then cured to induce cross-linking and form the dynamic cross-linked polymer.

With thermosetting resins of the prior art, once the resin has hardened (i.e. reached or exceeded the gel point), the article can no longer be transformed or repaired or recycled. Applying a moderate temperature to such an article does not lead to any observable or measurable transformation, and the application of a very high temperature leads to degradation of this article. In contrast, articles formed from the dynamic cross-linked polymer compositions described herein, on account of their particular composition, can be transformed, repaired, or recycled by raising the temperature of the article.

## Properties

The flat glass fiber filled compositions of the present disclosure may provide good mechanical and thermal properties while exhibiting improved dimensional distortion. The disclosed combination of flat glass fiber and epoxy further decrease warpage of highly filled materials (that is, materials having a filler content of 20 wt. % to 50 wt. %, or filler content greater than 30 wt. %). The present disclosure provides polyester based materials for low warpage applications formed by compounding a PBT with an epoxide and combining with a flat glass fiber.

In various examples, a molded planar sample of the filled composition exhibits less warpage from a horizontal plane when viewed than the warpage of a substantially identical composition in the absence of the glass fiber filler or epoxy component. Warpage may be further reduced in the disclosed compositions where polyethylene and a Lewis acid additive are introduced to the composition. The disclosed compositions exhibited smaller values for the absolute warpage based on physical measurements between a molded disk comprising the composition and a planar surface.

Thin-walled performance of conventional compositions may provide desirable dimensional stability, but could be improved. The present disclosure provides reduced warpage for dynamically cross-linked compositions. Polymer compositions of the present disclosure, including dynamically cross-linked polymer compositions, may exhibit improved warpage when compared to compositions in the absence of the flat glass fiber and/or phosphinate additive. It is noted however that the disclosed compositions may exhibit slightly more warpage after being subjected to a curing process to form a dynamically cross-linked composition.

## Definitions

Unless otherwise defined, all technical and scientific terms used herein have the same meaning as commonly understood by one of ordinary skill in the art. In case of conflict, the present document, including definitions, will control. Preferred methods and materials are described below, although methods and materials similar or equivalent to those described herein can be used in practice or testing. All publications, patent applications, patents and other references mentioned herein are incorporated by reference in their entirety. The materials, methods, and examples disclosed herein are illustrative only and not intended to be limiting.

The singular forms "a," "an," and "the" include plural referents unless the context clearly dictates otherwise.

As used in the specification and in the claims, the term "comprising" may include the aspects "consisting of' and "consisting essentially of." The terms "comprise(s)," "include(s)," "having," "has," "can," "contain(s)," and variants thereof, as used herein, are intended to be open-ended transitional phrases, terms, or words that require the presence of the named ingredients/steps and permit the presence of other ingredients/steps. However, such description should be construed as also describing compositions or processes as "consisting of' and "consisting essentially of' the enumerated ingredients/steps, which allows the presence of only the named ingredients/steps, along with any impurities that might result therefrom, and excludes other ingredients/steps.

As used herein, the terms "about" and "at or about" mean that the amount or value in question can be the value designated some other value approximately or about the same. It is generally understood, as used herein, that it is the nominal value indicated $\pm$10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Numerical values in the specification and claims of this application, particularly as they relate to polymers or polymer compositions, oligomers or oligomer compositions, reflect average values for a composition that may contain individual polymers or oligomers of different characteristics. Furthermore, unless indicated to the contrary, the numerical values should be understood to include numerical values which are the same when reduced to the same number of significant figures and numerical values which differ from the stated value by less than the experimental error of conventional measurement technique of the type described in the present application to determine the value.

All ranges disclosed herein are inclusive of the recited endpoint and independently combinable (for example, the range of "from 2 grams to 10 grams" is inclusive of the endpoints, 2 grams and 10 grams, and all the intermediate values). The endpoints of the ranges and any values disclosed herein are not limited to the precise range or value; they are sufficiently imprecise to include values approximating these ranges and/or values.

As used herein, approximating language may be applied to modify any quantitative representation that may vary without resulting in a change in the basic function to which it is related. Accordingly, a value modified by a term or terms, such as "about" and "substantially," may not be limited to the precise value specified, in some cases. In at least some instances, the approximating language may correspond to the precision of an instrument for measuring the value. The modifier "about" should also be considered as disclosing the range defined by the absolute values of the two endpoints. For example, the expression "from about 2 to about 4" also discloses the range "from 2 to 4." The term "about" may refer to plus or minus 10% of the indicated number. For example, "about 10%" may indicate a range of 9% to 11%, and "about 1" may mean from 0.9-1.1. Other meanings of "about" may be apparent from the context, such as rounding off, so, for example "about 1" may also mean from 0.5 to 1.4.

As used herein, "Tm" refers to the melting point at which a polymer, or oligomer, completely loses its orderly arrangement. As used herein, "Tc" refers to the polymer's crystallization temperature. The terms "Glass Transition Temperature" or "Tg" refer to the maximum temperature at which a polymer will still have one or more useful properties. These properties include impact resistance, stiffness, strength, and shape retention. The Tg therefore may be an indicator of its useful upper temperature limit, particularly in plastics applications. The Tg may be measured using a differential scanning calorimetry method and expressed in degrees Celsius.

As used herein, "cross-link," and its variants, refer to the formation of a stable covalent bond between two polymer chains. This term is intended to encompass the formation of covalent bonds that result in network formation. The term "cross-linkable" refers to the ability of a polymer to form such stable covalent bonds.

As used herein, "dynamic cross-linked polymer compositions" are a versatile class of polymers having a system of covalently cross-linked polymer networks and can be characterized by the nature of their structure. At elevated temperatures, the cross-links undergo transesterification reactions at such a rate that a flow-like behavior can be observed. Here, the polymer may be processed much like a viscoelastic thermoplastic. At lower temperatures, these dynamic cross-linked polymer compositions behave more like classical thermosets. As the rate of inter-chain transesterification slows down, the network becomes more rigid. The dynamic nature of their cross-links allows these polymers to be heated, reheated, and reformed, as the polymers maintain structural integrity under demanding conditions. The disclosed dynamically cross-linked compositions may have a $T_g$ of about 40 °C to about 60 °C. An article made from a dynamic cross-linked polymer composition can be heated and deformed, and upon returning to the original temperature, maintains the deformed shape. As such, articles in accordance with the present disclosure may comprise a shape generated by applying mechanical forces to a molded piece formed from the dynamic cross-linked polymer composition. This combination of properties permits the manufacture of shapes that are difficult or impossible to obtain by molding or for which making a mold would not be economical. Further, dynamically cross-linked (or pre-dynamically cross-linked) polymer compositions of the present disclosure may less dimensional distortion than a substantially identical composition in the absence of the flat glass fiber and/or epoxy component.

Dynamic cross-linked polymer compositions generally have good mechanical strength at low temperatures, high chemical resistance, and low coefficient of thermal expansion, along with processability at high temperatures. Examples of dynamic cross-linked polymer compositions are described herein, as well as in U.S. Patent Application No. 2011/0319524, WO 2012/152859; WO 2014/086974; D. Montarnal et al., Science 334 (2011) 965-968; and J.P. Brutman et al, ACS Macro Lett. 2014, 3, 607-610. As an example, articles may be formed from the dynamic cross-linked polymer compositions of the present disclosure and may include composites, a thermoformed material, or a combination thereof.

Examining the nature of a given polymer composition may distinguish whether the composition is cross-linked, reversibly cross-linked, or non-crosslinked, and distinguish whether the composition is conventionally cross-linked or dynamically cross-linked. Dynamically cross-linked networks feature bond exchange reactions proceeding through an associative mechanism, while reversible cross-linked networks feature a dissociative mechanism. That is, the dynamically cross-linked composition remains cross-linked at all times, provided the chemical equilibrium allowing cross-linking is maintained. A reversibly cross-linked network however shows network dissociation upon heating, reversibly transforming to a low-viscous liquid and then reforming the cross-linked network upon cooling. Reversibly cross-linked compositions also tend to dissociate in solvents, particularly polar solvents, while dynamically cross-linked compositions tend to swell in solvents as do conventionally cross-linked compositions.

The cross-linked network apparent in dynamic and other conventionally cross-linked systems may also be identified by rheological testing. An oscillatory time sweep (OTS) measurement at fixed strain and temperature may be used to confirm network formation. Exemplary OTS curves are presented in FIG. 1 for a cross-linked polymer network.

A curve may indicate whether or not the polymer has a cross-linked network. Initially, the loss modulus (viscous component) has a greater value than the storage modulus (elastic component) indicating that the material behaves like a viscous liquid. Polymer network formation is evidenced by the intersection of the loss and storage modulus curves. The intersection, referred to as the "gel point," represents when the elastic component predominates the viscous component and the polymer begins to behave like an elastic solid.

In distinguishing between dynamic cross-linking and conventional (or non-reversible) cross-linking, a stress relaxation measurement may also, or alternatively, be performed at constant strain and temperature.

After network formation, the polymer may be heated and a certain strain is imposed on the polymer. After removing the strain, the resulting evolution of the elastic modulus as a function of time reveals whether the polymer is dynamically or conventionally cross-linked. Exemplary curves for dynamically and conventionally cross-linked polymer networks are presented in FIG. 2.

Stress relaxation generally follows a multimodal behavior:

$$G/G_0 = \sum_{i=1}^{n} C_i \exp(-t/\tau_i),$$

where the number (n), relative contribution ($C_i$) and characteristic timescales ($\tau_i$) of the different relaxation modes are governed by bond exchange chemistry, network topology and network density. For a conventional cross-linked networks, relaxation times approach infinity, $\tau \rightarrow \infty$, and $G/G_0 = 1$ (horizontal dashed line). Apparent in the curves for the normalized modulus ($G/G_0$) as a function of time, a conventionally cross-linked network does not exhibit any stress relaxation because the permanent character of the cross-links prevents the polymer chain segments from moving with respect to one another. A dynamically cross-linked network, however, features bond exchange reactions allowing for individual movement of polymer chain segments thereby allowing for complete stress relaxation over time.

If the networks are DCNs, they should be able to relax any residual stress that is imposed on the material as a result of network rearrangement at higher temperature. The relaxation of residual stresses with time can be described with single-exponential decay function, having only one characteristic relaxation time $\tau^*$:

$$G(t) = G(0) \times \exp\left(-\frac{t}{\tau^*}\right)$$

A characteristic relaxation time can be defined as the time needed to attain particular G(t)/G(0) at a given temperature. At lower temperature, the stress relaxes slower, while at elevated temperatures network rearrangement becomes more active and hence the stress relaxes faster, proving the dynamic nature of the network. The influence of temperature on the stress relaxation modulus clearly demonstrates the ability of the cross-linked network to relieve stress or flow as a function of temperature.

Additionally, the influence of temperature on the stress relaxation rate in correspondence with transesterification rate were investigated by fitting the characteristic relaxation time, $\tau^*$ to an Arrhenius type equation.

$$\ln \tau^* = -E_a/RT + \ln A$$

where $E_a$ is the activation energy for the transesterification reaction.

Generally, a dynamic mechanical analysis (DMA) of storage modulus as a function of temperature may exhibit particular characteristics. A dynamically cross-linked polymer composition may exhibit a plateau modulus of from about 0.01 MPa to about 1000 MPa, at a temperature above the melting temperature (and, depending on the polymer, above the glass transition temperature) of the polyester component. Non-limiting FIG. 3 provides a set of exemplary, qualitative curves. Two of the three curves (curves B and C) exhibit a plateau modulus above a certain temperature, thus depicting a dynamically cross-linked network. One of the three curves (curve A), instead of showing a plateau modulus above a certain temperature, exhibits an abrupt decline in modulus at the elevated temperature. Thus, curve A provides a qualitative depiction of a non-dynamically cross-linked polymer composition.

A pre-dynamic cross-linked composition, formed according to the present disclosure described herein, when subjected to a curing process may exhibit a plateau modulus of from about 0.01 MPa to about 1000 MPa, at a temperature

above the melting temperature (and, depending on the polymer, above the glass transition temperature) of the polyester component as measured by dynamic mechanical analysis. The cured pre-dynamic cross-linked polymer composition may further exhibit the capability of relaxing internal residual stresses at a characteristic timescale of between 0.1 and 100,000 seconds above the glass transition temperature of the polyester component, as measured by a stress relaxation rheology measurement. It should be understood that in the case of some polymers, (including some semicrystalline polymers, e.g., PBT) the cured pre-dynamic cross-linked polymer composition may further exhibit the capability of relaxing internal residual stresses at a characteristic timescale of between 0.1 and 100,000 seconds above the Tm for that polymer.

ASPECTS

The present disclosure relates to at least the following aspects.

Aspect 1. A composition comprising: from about 2 wt. % to about 20 wt. % of an epoxy component; from about 30 wt. % to about 70 wt. % of a polyester polymer component; from about 0.01 wt. % to about 10 wt. % a Lewis acid additive; from about 0.01 wt. % to about 10 wt. % of a polyalkylene polymer component; and from about 20 wt. % to about 50 wt. % of a glass fiber filler, wherein a molded planar sample of the composition exhibits less warpage from a horizontal plane when viewed than the warpage of a substantially identical composition in the absence of the glass fiber filler or epoxy component.

Aspect 2. The composition of claim 1, wherein the Lewis acid additive comprises aluminum phosphinate.

Aspect 3. A composition comprising: from about 2 wt. % to about 20 wt. % of an epoxy component having at least two functional groups; from about 30 wt. % to about 70 wt. % of a polyester polymer component; from about 0.01 wt. % to about 10 wt. % a phosphinate additive; from about 0.01 wt. % to about 10 wt. % of a polyalkylene polymer component; and from about 20 wt. % to about 50 wt. % of a glass fiber filler, wherein a molded planar sample of the composition exhibits less warpage from a horizontal plane when viewed than the warpage of a substantially identical composition in the absence of the glass fiber filler or epoxy component.

Aspect 4. A composition comprising: from about 2 wt. % to about 20 wt. % of an epoxy component having at least two functional groups; from about 30 wt. % to about 70 wt. % of a polyester polymer component; from about 0.01 wt. % to about 5 wt. % a phosphinate additive; from about 0.01 wt. % to about 10 wt. % of a polyalkylene polymer component; and from about 20 wt. % to about 50 wt. % of a glass fiber filler, wherein a molded planar sample of the composition exhibits less warpage from a horizontal plane when viewed than the warpage of a substantially identical composition in the absence of the glass fiber filler or epoxy component.

Aspect 5. A composition comprising: from about 2 wt. % to about 20 wt. % of an epoxy component having at least two functional groups; from about 30 wt. % to about 70 wt. % of a polyester polymer component; from about 0.01 wt. % to about 2 wt. % a phosphinate additive; from about 0.01 wt. % to about 10 wt. % of a polyalkylene polymer component; and from about 20 wt. % to about 50 wt. % of a glass fiber filler, wherein a molded planar sample of the composition exhibits less warpage from a horizontal plane when viewed than the warpage of a substantially identical composition in the absence of the glass fiber filler or epoxy component.

Aspect 6. The composition of any of claims 1-5, wherein the glass fiber filler is a flat glass fiber.

Aspect 7. The composition of any of claims 1-6, wherein the glass fiber filler has a ratio of width to length of 1:4.

Aspect 8. The composition of any one of claims 1-7, wherein the glass fiber filler is present in an amount such that the composition has a filler content of at least 30 wt. %.

Aspect 9. The composition of any one of claims 1-7, wherein the glass fiber filler is present in an amount such that the composition has a filler content of from about 20 wt. % to about 50 wt. %.

Aspect 10. The composition of any one of claims 1-9, wherein the epoxy component has at least two functional groups.

Aspect 11. The composition of any one of claims 1-10, wherein the epoxy component comprises a glycidyl epoxy ether.

Aspect 12. The composition of any one of claims 1-11, wherein the composition comprises from about 2 wt. % to about 20 wt. % of the epoxy component.

Aspect 13. The composition of any one of claims 1-11, wherein the composition comprises up to about 15 wt. % of the epoxy component.

Aspect 14. The composition of any one of claims 3-13, wherein the phosphinate additive comprises an aluminum phosphinate.

Aspect 15. The composition of any one of claims 3-14, wherein the phosphinate additive is present in an amount less than 2 wt. %.

Aspect 16. The composition of any one of claims 3-14, wherein the phosphinate additive is present in an amount less than 1 wt. %.

Aspect 17. A method of preparing a polymer composition, the method comprising: reacting an epoxy component having at least two functional groups, a polyester component, a phosphinate additive, and a polyalkylene component

at a temperature and for a time sufficient to form a first composition; and combining the first composition with a filler to provide a filled composition, wherein a molded planar sample of the filled composition exhibits less warpage from a horizontal plane when viewed than the warpage of a substantially identical composition in the absence of the filler or epoxy component.

Aspect 18. The method of claim 17, further comprising subjecting the first composition to a curing process to provide a cross-linked or dynamically cross-linked polymer composition.

Aspect 19. The method of claim 17, further comprising subjecting the first composition to an annealing process to provide an annealed composition.

Aspect 20. The method of any one of claims 17-19, wherein the filler comprises flat glass fiber.

Aspect 21. The method of any one of claims 17-19, wherein the filler is present in an amount greater than 30% based on a total weight of the first composition.

Aspect 22. The method of any one of claims 17-21, wherein the epoxy component comprises a glycidyl epoxy ether.

Aspect 23. The method of any one of claims 17-22, wherein the polymer composition comprises from about 2 wt. % to about 20 wt. % of the epoxy component.

Aspect 24. The method of any one of claims 17-22, wherein the polymer composition comprises up to about 15 wt. % of the epoxy component.

Aspect 25. The method of any one of claims 17-24, wherein the time for the reacting is less than about 15 minutes.

Aspect 26. The method of any one of claims 17-25, wherein the polyester component comprises a polyalkylene terephthalate.

Aspect 27. The method of any one of claims 18-26, wherein the temperature to form a cross-linked polymer composition is a temperature within less than about 10 °C of the melt temperature of the polyester component.

## EXAMPLES

The following examples are provided to illustrate the compositions, processes, and properties of the present disclosure. The examples are merely illustrative and are not intended to limit the disclosure to the materials, conditions, or process parameters set forth therein.

Extrusion for all blends was performed on a 25 mm twin-screw ZSK extruder (B25) from Werner & Pfleiderer. Samples were prepared from the materials presented in Table 1. All powders were blended using a paint shaker and fed through one feeder. The glass fibers were fed separately through the hopper on a downstream side-feeder. Molding of test specimen for testing was done on an Engel 45 Tons injection molding machine equipped with insert molds from Axxicon.

**Table 1. Components for samples.**

| Name | Description | Supplier |
|---|---|---|
| PBT | Polybutylene terephthalate (PBT) | SABIC |
| Epoxy 1 | DER 671™ Epoxy Resin (MW = 0.7-1.1 kg/mol) | Olin |
| Epoxy 2 | DER 667™ Epoxy Resin | Olin |
| PE | Polyethylene (PE) (ld), milled 1000 μm | SABIC |
| Anti-Oxidant | Irganox™ 1010 | BASF |
| Lewis acid Additive | Phosphinate additive; Exolit™ OP1240 | Clariant |
| GF 1 | Chopped glass (aluminum-borosilicate) fiber, bonding (with sizing) for crystalline PBT resin, diameter 10 μm | Nippon Electric Glass |
| GF 2 | Non-circular or flat glass fiber (width to length 1:4 ratio) CSG 3PA-830 | Nittobo |
| GF 3 | Non-circular or flat glass fiber) with silane treatment (width to length 1:4 ratio) (28u:7u) CSG 3PA-820 | Nittobo |
| GF 4 | Milled Glass fiber; 14 μm diameter, average fiber length 190 μm | Nippon Electric Glass |
| GF 5 | Non-Bonding glass (without sizing); chopped aluminum-borosilicate fiber; fiber | Lanxess Corp |

Formulations of the compositions are presented in Table 2. As shown, Comparative Example CE1 comprises

PBT as a polyester component, but in the absence of an epoxy. Samples E2, E4, E5, E6, and E8 also include the epoxy component while examples E3, E5, and E7 do not.

**Table 2. Formulations of PBT, epoxy coupler component, and glass fibers**

| | CE1 | E2 | E3 | E4 | E5 | E6 | E7 | E8 |
|---|---|---|---|---|---|---|---|---|
| PBT | 69.35 | 56.25 | 69.35 | 56.25 | 69.35 | 56.25 | 69.35 | 56.25 |
| Epoxy 1 | | 12.5 | | 12.5 | | 12.5 | | 12.5 |
| PE | 0.50 | 0.50 | 0.50 | 0.50 | 0.50 | 0.50 | 0.50 | 0.50 |
| Phosphinate additive | | 0.6 | | 0.6 | | 0.6 | | 0.6 |
| Antioxidant | 0.15 | 0.15 | 0.15 | 0.15 | 0.15 | 0.15 | 0.15 | 0.15 |
| GF 1 | 30.0 | 30.0 | | | | | | |
| GF 2 | | | 30 | 30 | | | | |
| GF 4 | | | | | 30 | 30 | | |
| GF 5 | | | | | | | 30 | 30 |

To determine the influence of flat glass fiber on PBT and PBT DCN, 3mm thick disks were molded according to the methods described above and placed on a table as a plane horizontal surface. As shown in FIG. 4, flat glass (FGF) improved the warpage in GF-PBT formulations based on the space visibly apparent between the molded disk and the surface of the table. When 12.5% epoxy was included in the formulation as in examples E2, E4, E6, and E8, the difference was substantial. The molded disks formulated with flat glass fiber were almost flush with the table surface directly after molding. These samples also only slightly warped upon curing (4 hours at 200 °C) and placement on the table surface.

According to FIG. 4, Sample E4, having flat glass fiber, exhibited the least space visibly apparent between the table surface and molded disk. Sample E5, which included milled GF also shows less warpage in the epoxy-based formulation E8. The difference however, is less evident, indicating that the combination of epoxy, additive and flat glass fibers have a positive effect on the warpage (compare E4 and E3 with E5 and E6).

Additional molded disks were prepared and the formulations E9 and E10 are presented in Table 3. The examples in Table 3 demonstrate the effect of glass fiber addition to compositions containing 12.5% epoxy and PBT base resin without additive. As can be seen from FIG. 5, E10 shows a better dimensional stability as E9, however, comparing E10 to E4 shows reveals further improves dimensional stability for E4. Thus, sample E4 demonstrates improved dimensional stability based on a combination of additive, epoxy, and flat glass fiber as shown in FIG. 4.

**Table 3. Formulations having sized glass fiber (E9) or flat glass fiber (E10)**

| | E9 | E10 |
|---|---|---|
| PBT | 56.9 | 56.9 |
| Epoxy 1 | 12.5 | 12.5 |
| PE | 0.50 | 0.50 |
| Phosphinate Additive | 0.6 | 0.6 |
| Antioxidant | 0.15 | 0.15 |
| GF 1 | 30.0 | |
| GF 2 | | 30 |

Additional sample E11 was prepared to demonstrate the effect of flat GF addition to compositions containing 12.5% epoxy and PBT base resin with additive. As can be seen from FIG. 4, L11 shows a similar dimensional stability as E4, (E4 has a slightly better dimensional stability exhibited by the minimal space apparent between the table surface and the molded disk). Sample E11 establishes that the approach may be applied to different flat glass fiber types.

**Table 4. Formulations having flat glass fiber (E4) or sized flat glass fiber (E11).**

| | E4 | E11 |
|---|---|---|
| PBT | 56.25 | 56.25 |
| Epoxy 1 | 12.5 | 12.5 |
| PE | 0.50 | 0.50 |
| Phosphinate Additive | 0.6 | 0.6 |
| Antioxidant | 0.15 | 0.15 |
| GF 2 | 30.0 | |
| GF 3 | | 30 |

Further samples were prepared to assess effects of the cylinder and mold temperatures on warpage. It is generally known that by increasing cylinder and mold temperatures the dimensional stability may be improved (i.e. less warpage). Another sample of E3 (containing the flat glass fiber) was molded at higher cylinder temperatures. As shown in FIG. 5, little difference was observed when comparing the disks molded at cylinder temperature (CT) 250 °C and mold temperature (MT) 65°C vs cylinder temperature (CT) 260 °C and mold temperature (MT) 80°C.

Additional samples shown in Table 5 were prepared to demonstrate the effect of epoxy loading in compositions comprising flat glass fiber (GF2) and PBT resin with an additive. As shown in FIG. 6, sample E12 shows a comparable similar dimensional stability as E4 showing that the approach can be applied to different epoxy loadings. E12 also established that although higher epoxy loading shows a slightly improved dimensional stability (that is, less space between the molded disk and the table surface).

**Table 5. Formulations having flat glass fiber (E4) and flat glass fiber with increased epoxy loading (E12)**

| | E12 | E4 |
|---|---|---|
| PBT | 62.5 | 56.25 |
| Epoxy 1 | 6.25 | 12.5 |
| PE | 0.50 | 0.50 |
| Phosphinate Additive | 0.6 | 0.6 |
| Antioxidant | 0.15 | 0.15 |
| GF 2 | 30.0 | 30 |

Sample 13 presented in Table 6 was prepared to demonstrate the effect of flat glass fiber (GF2) loading on compositions containing 12.5% Epoxy 1 and PBT resin with the FR additive. As shown in FIG. 7, sample E13 appears slightly more warped (more space) compared to E4 which suggests that the effect is less pronounced for lower glass loadings.

**Table 6. Formulations with flat glass fiber (E4) and flat glass fiber with further increased epoxy loading (E13)**

| | E13 | E4 |
|---|---|---|
| PBT | 71.3 | 56.25 |
| Epoxy 1 | 12.5 | 12.5 |
| PE | 0.50 | 0.50 |
| Phosphinate Additive | 0.6 | 0.6 |
| Antioxidant | 0.15 | 0.15 |
| GF 2 | 15 | 30 |

Sample E13 presented in Table 7, was prepared to demonstrate the effect of the type of epoxy used in compositions containing 30% GF 2, PBT resin, and an additive. See FIG. 8. As shown in FIG. 9, sample E14 appears to have comparable warpage to sample E4, indicating that a low warpage may be achieved using different epoxies. The samples were also been heat aged or cured (120 °C for 2 hrs) which did not show an effect on the dimensional stability and showed a good performance for the epoxy, flat glass, additive, and PBT compositions

**Table 7. Formulations with flat glass fiber (E4) and flat glass fiber with alternative epoxy component D.E.R.™ 667 (E14)**

| | E14 | E4 |
|---|---|---|
| PBT | 71,3 | 56.25 |
| Epoxy 1 | | 12.5 |
| Epoxy 2 | 12.5 | |
| PE | 0.50 | 0.50 |
| Phosphinate Additive | 0.6 | 0.6 |
| Antioxidant | 0.15 | 0.15 |
| GF 2 | 15 | 30 |

Surprisingly, the combination of epoxy, PBT resin, phosphinate additive, and flat glass fiber also provided desirable modulus and thermal performance. Table 10 provides mechanical properties and the standards at which they were obtained for samples CE1, E2, E3, E4, E7 and E8. When using GF2 (flat fiber) in combination with the epoxy, a high tensile modulus was obtained with similar thermal properties. With GF4 (milled fiber) a filler that is more often used for better dimensional stability (lower warpage), or GF5 (non-bonding), the mechanical and thermal properties were less desirable, even with the addition of epoxy and additive.

Quantitative results are also shown in FIGS. 12-16. FIG. 12 shows the absolute average warpage in millimeters for comparative sample CE1 and inventive samples E2, E3, E4, E7, and E8. The values for the absolute average warpage are the measurements for the physical distance of the highest point of the molded disk to the planar surface at which it was placed, as shown in FIGS. 1-11. Consistent with the images in FIGS. 1-11, E4 had the smallest absolute average warpage. FIG. 13 shows the absolute average warpage for E9, E10, and E11 compared to E4. Again, consistent with the images in FIGS. 1-11, E4 exhibited the lowest absolute average warpage in mm. FIG. 14 provides a comparison of the absolute average warpage for the compositions CE1, E2, E3, E4, E7, and E8 either after molding or after annealing. As shown, E4 still exhibited the least warpage whether after molding or annealing. FIG. 15 provides comparisons among the processes of molding, annealing, and a curing process. While all samples showed increased warpage following the curing process, E4 continued to exhibit the lowest warpage.

All cited patents, patent applications, and other references are incorporated herein by reference in their entirety. However, if a term in the present application contradicts or conflicts with a term in the incorporated reference, the term from the present application takes precedence over the conflicting term from the incorporated reference.

While typical aspects have been set forth for the purpose of illustration, the foregoing descriptions should not be deemed to be a limitation on the scope herein. Accordingly, various modifications, adaptations, and alternatives can occur to one skilled in the art without departing from the spirit and scope herein.

## Claims

1. A composition comprising:

   from about 2 wt. % to about 20 wt. % of an epoxy component;
   from about 30 wt. % to about 70 wt. % of a polyester polymer component;
   from about 0.01 wt. % to about 10 wt. % a Lewis acid additive;
   from about 0.01 wt. % to about 10 wt. % of a polyalkylene polymer component; and
   from about 20 wt. % to about 50 wt. % of a glass filler,
   wherein a molded planar sample of the composition exhibits less warpage from a horizontal plane when viewed than the warpage of a substantially identical composition in the absence of the glass fiber filler or epoxy component.

2. The composition of claim 1, wherein the Lewis acid additive comprises aluminum phosphinate.

**3.** A composition comprising:

from about 2 wt. % to about 20 wt. % of an epoxy component having at least two functional groups;
from about 30 wt. % to about 70 wt. % of a polyester polymer component;
from about 0.01 wt. % to about 10 wt. % a phosphinate additive;
from about 0.01 wt. % to about 10 wt. % of a polyalkylene polymer component; and
from about 20 wt. % to about 50 wt. % of a glass filler,
wherein a molded planar sample of the composition exhibits less warpage from a horizontal plane when viewed than the warpage of a substantially identical composition in the absence of the glass fiber filler or epoxy component.

**4.** The composition of claim 1, wherein the glass fiber filler is a flat glass fiber.

**5.** The composition of claim 1, wherein the glass fiber filler has a ratio of width to length of 1:4.

**6.** The composition of any one of claims 1-3, wherein the glass fiber filler is present in an amount such that the composition has a filler content of at least 30 wt. %.

**7.** The composition of any one of claims 1-3, wherein the glass fiber filler is present in an amount such that the composition has a filler content of from about 20 wt. % to about 50 wt. %.

**8.** The composition of any one of claims 1-7, wherein the epoxy component has at least two functional groups.

**9.** The composition of any one of claims 1-8, wherein the epoxy component comprises a glycidyl epoxy ether.

**10.** The composition of any one of claims 1-9, wherein the composition comprises from about 2 wt. % to about 20 wt. % of the epoxy component.

**11.** The composition of any one of claims 1-10, wherein the composition comprises up to about 15 wt. % of the epoxy component.

**12.** The composition of any one of claims 2-11, wherein the phosphinate additive comprises an aluminum phosphinate.

**13.** A method of preparing a polymer composition, the method comprising:

reacting
an epoxy component having at least two functional groups,
a polyester component,
a phosphinate additive, and
a polyalkylene component
at a temperature and for a time sufficient to form a first composition; and
combining the first composition with a filler to provide a filled composition,
wherein a molded planar sample of the filled composition exhibits less warpage from a horizontal plane when viewed than the warpage of a substantially identical composition in the absence of the filler or epoxy component.

**14.** The method of claim 13, wherein the filler comprises flat glass fiber.

**15.** The method of any one of claims 13-14, wherein the polymer composition comprises from about 2 wt. % to about 20 wt. % of the epoxy component.

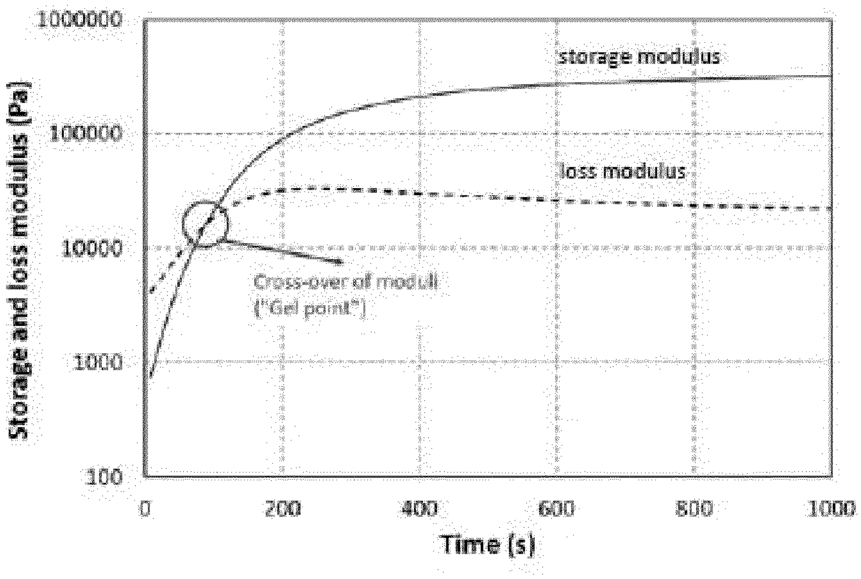

1000000
100000
10000
1000
100
Storage and loss modulus (Pa)
storage modulus
loss modulus
Cross-over of moduli
("Gel point")
0
200
400
600
800
1000
Time (s)


FIG. 1

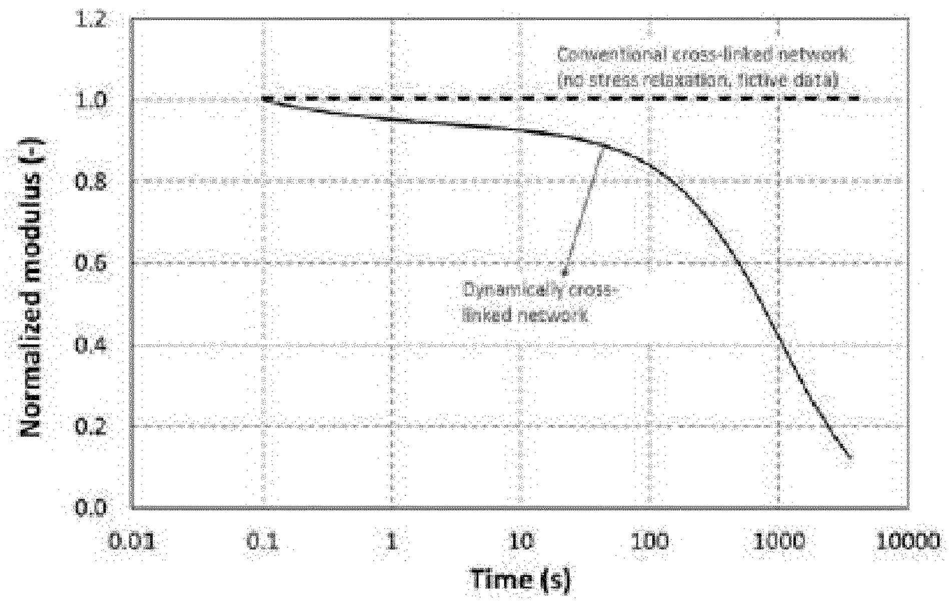

1.2
1.0
0.8
0.6
0.4
0.2
0.0
Normalized modulus (-)
Conventional cross-linked network
(no stress relaxation, fictive data)
Dynamically cross-
linked network
0.01
0.1
1
10
100
1000
10000
Time (s)


FIG. 2

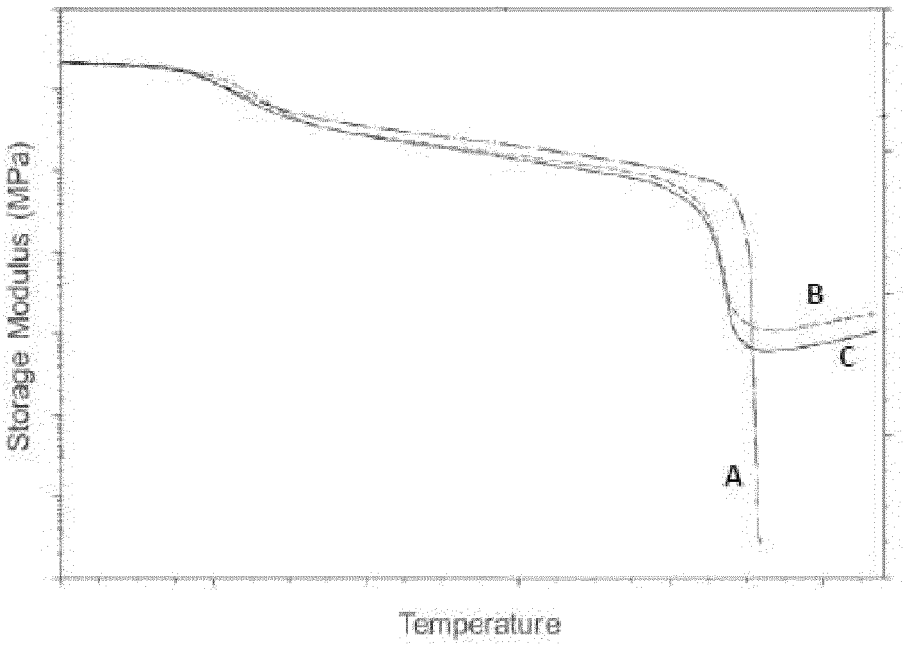


FIG. 3

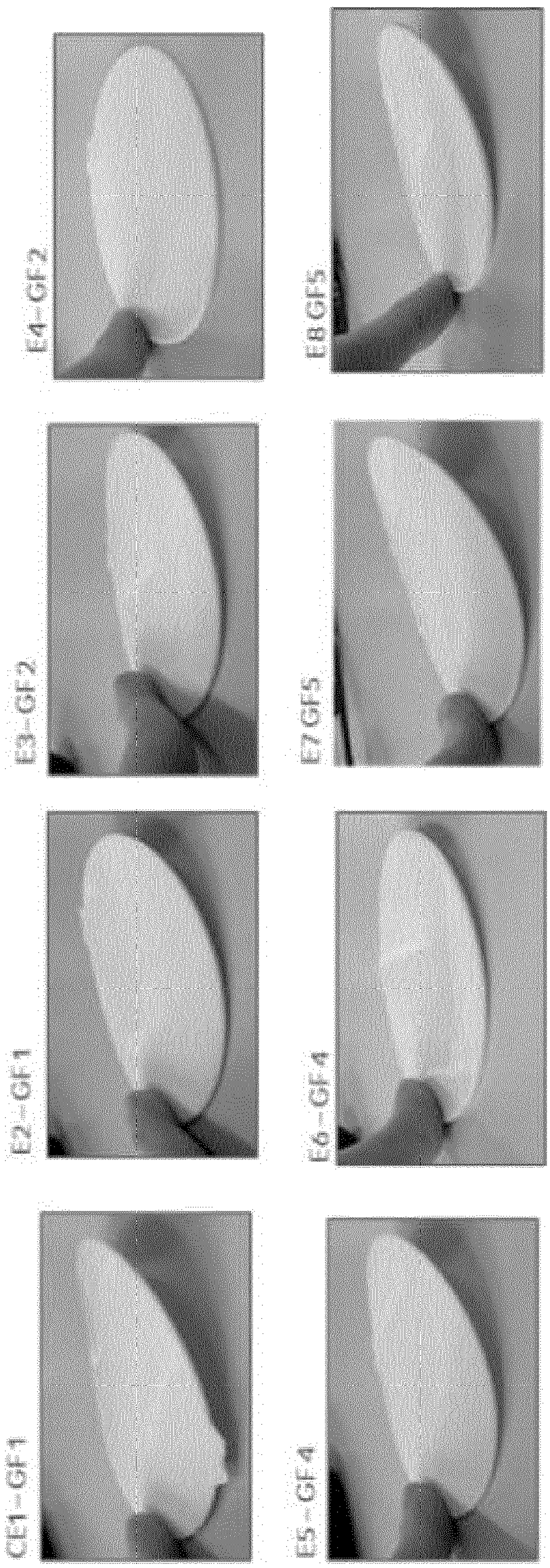


FIG. 4

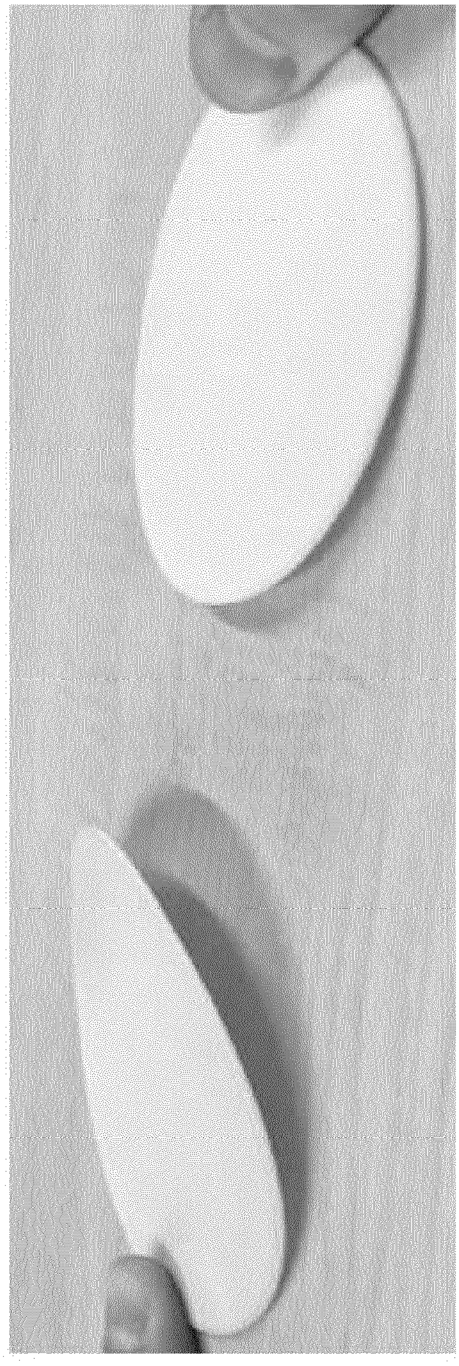

FIG. 5

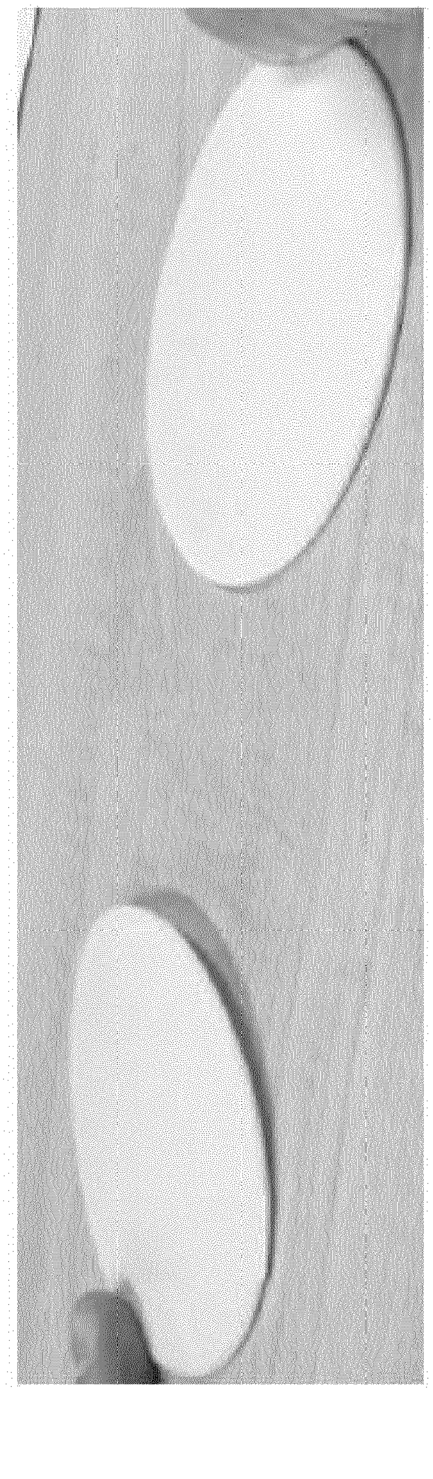

FIG. 6

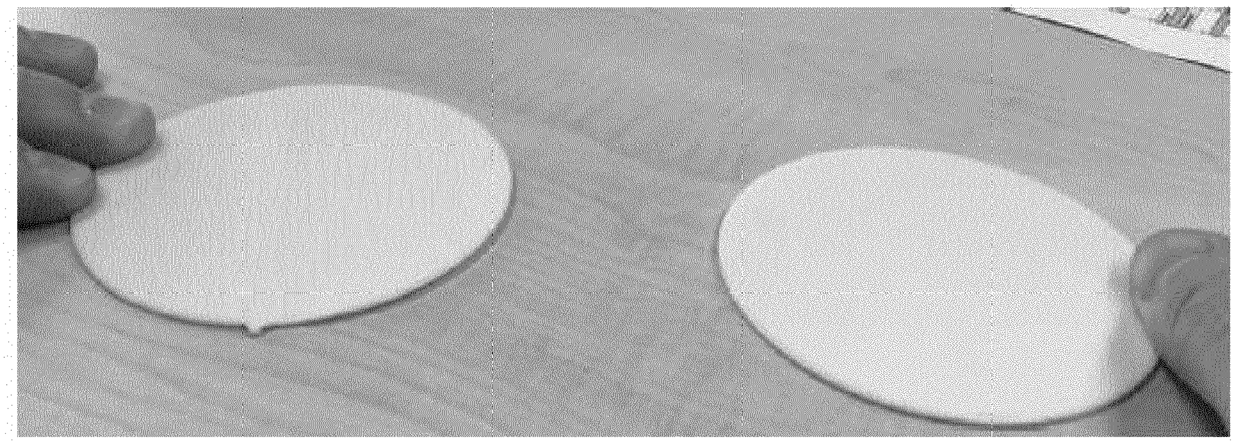

FIG. 7

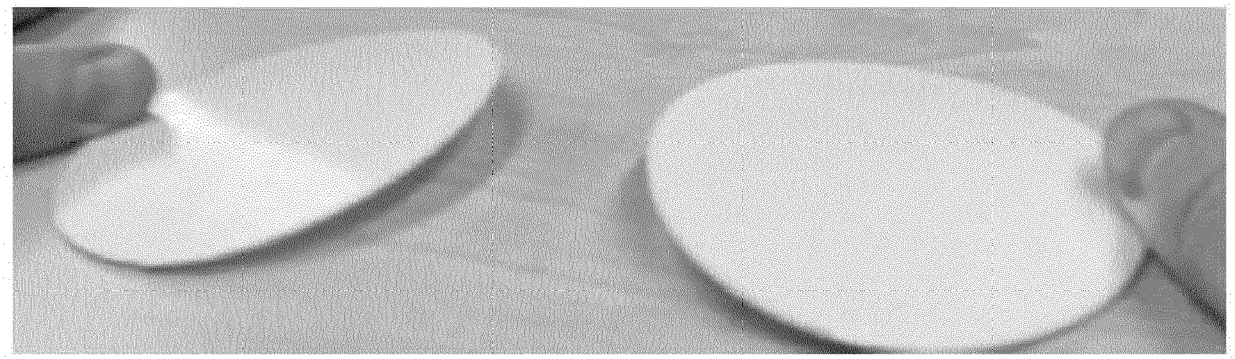

FIG. 8

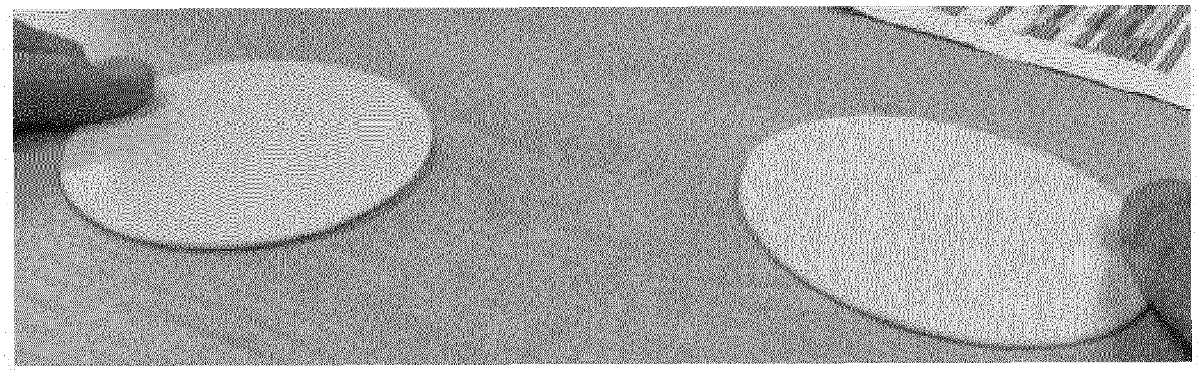

FIG. 9

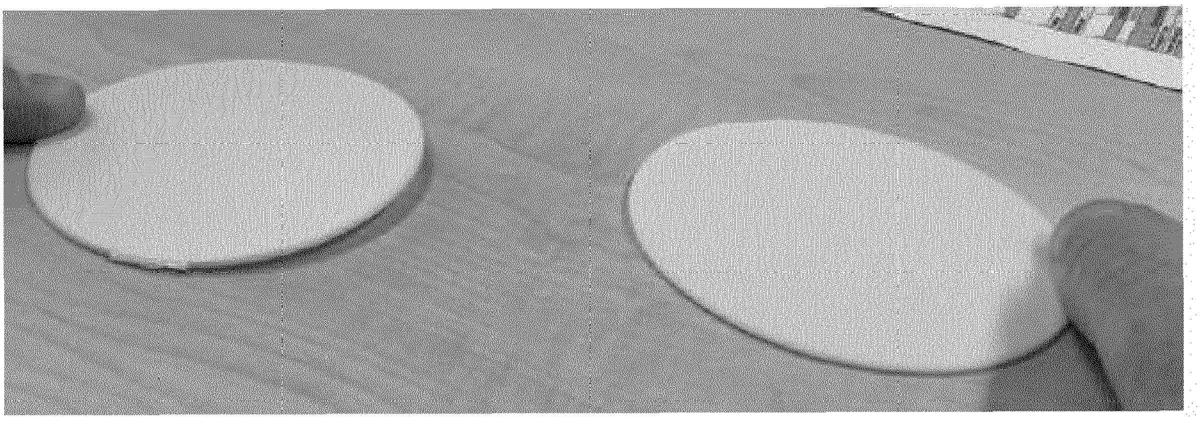

FIG. 10

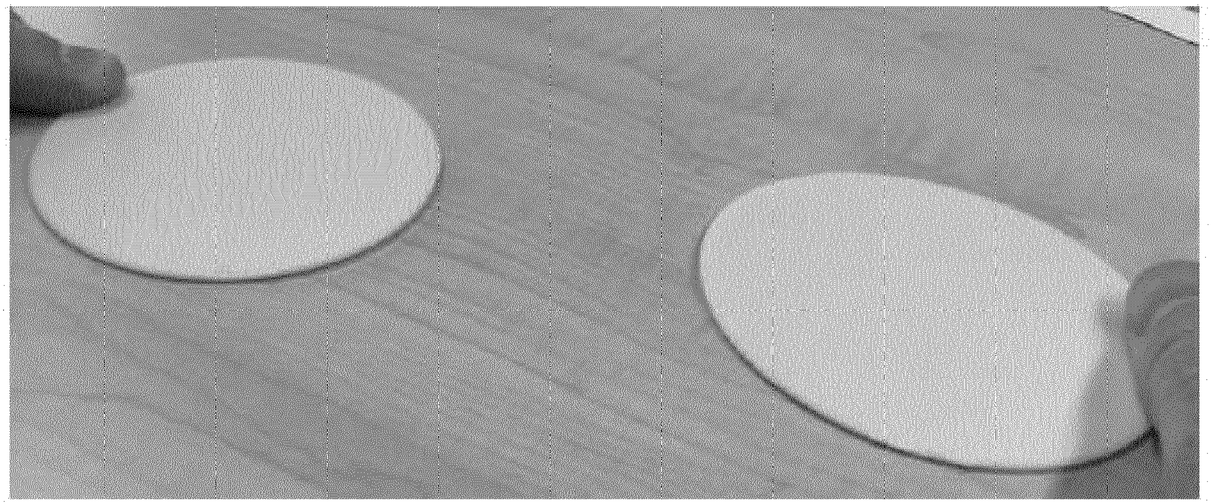

FIG. 11

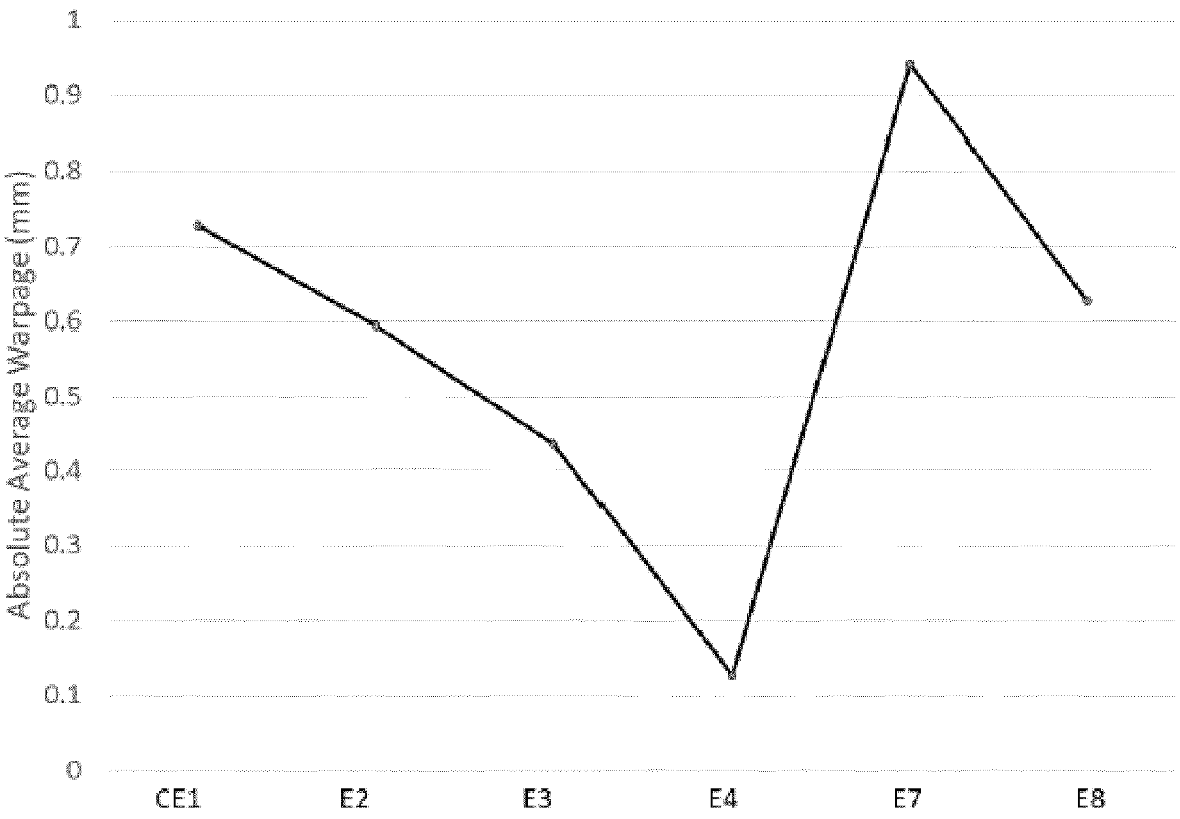
1
0.9
0.8
0.7
0.6
0.5
0.4
0.3
0.2
0.1
0
Absolute Average Warpage (mm)
CE1
E2
E3
E4
E7
E8

FIG. 12

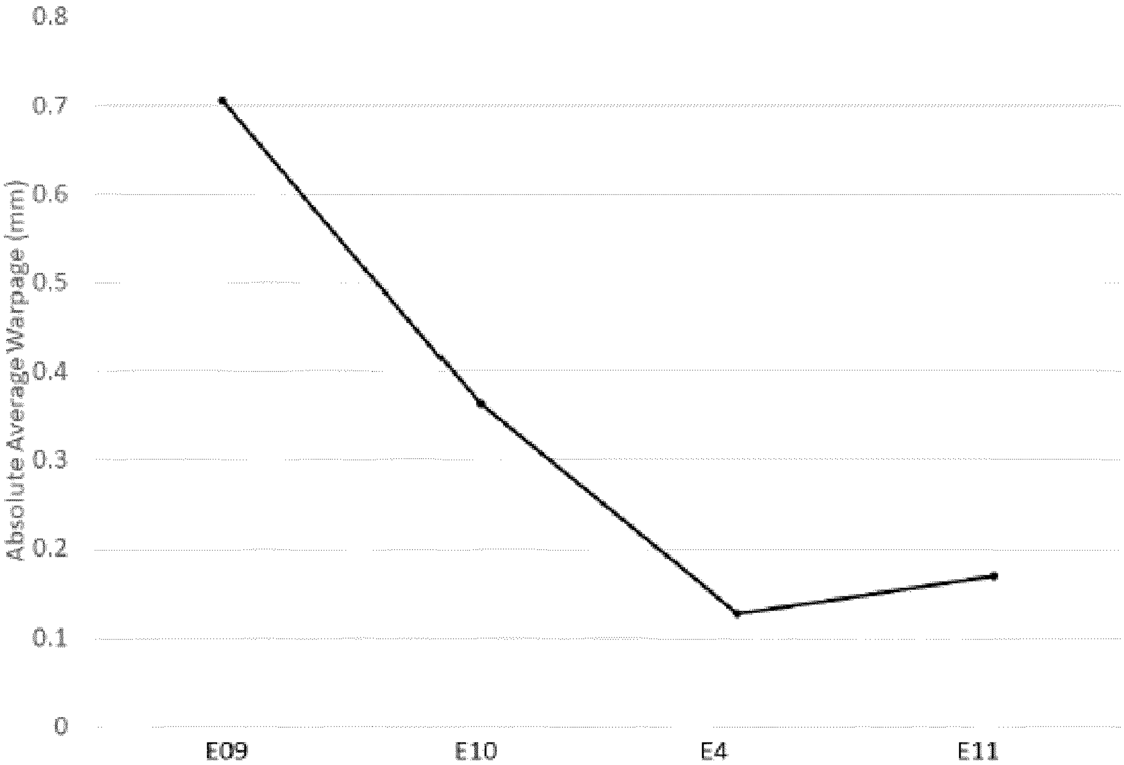
0.8
0.7
0.6
0.5
0.4
0.3
0.2
0.1
0
Absolute Average Warpage (mm)
E09
E10
E4
E11

FIG. 13

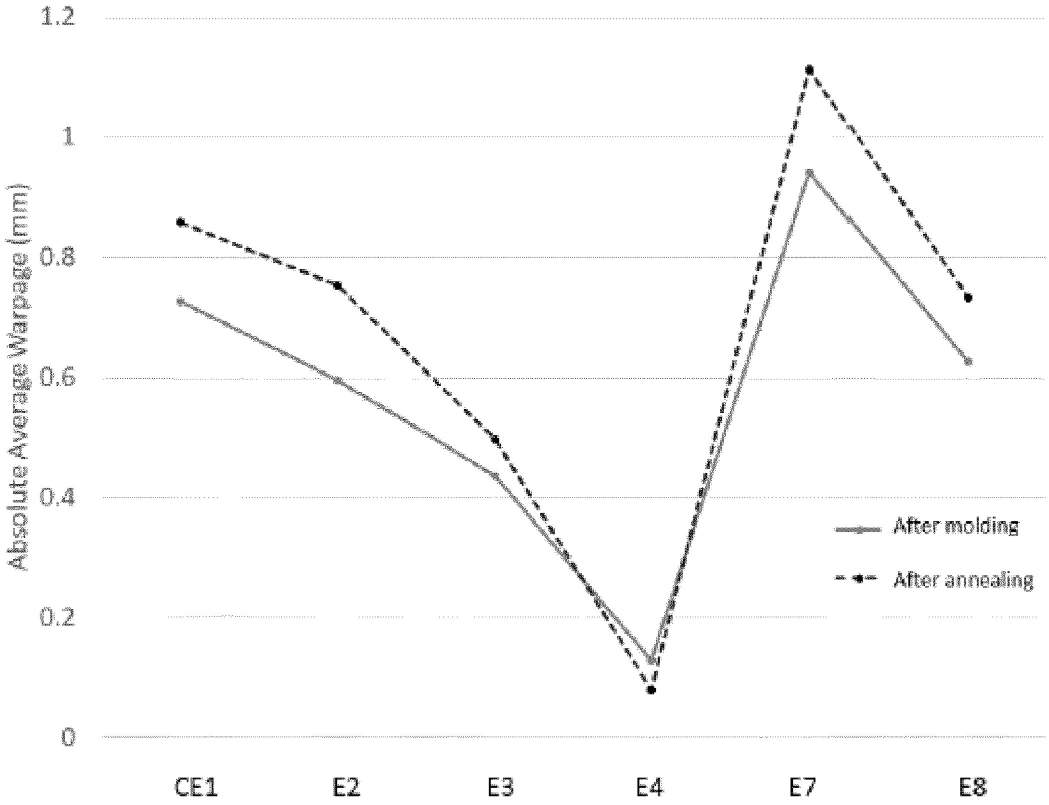
1.2
1
0.8
0.6
0.4
0.2
0
Absolute Average Warpage (mm)
CE1
E2
E3
E4
E7
E8
After molding
After annealing

FIG. 14

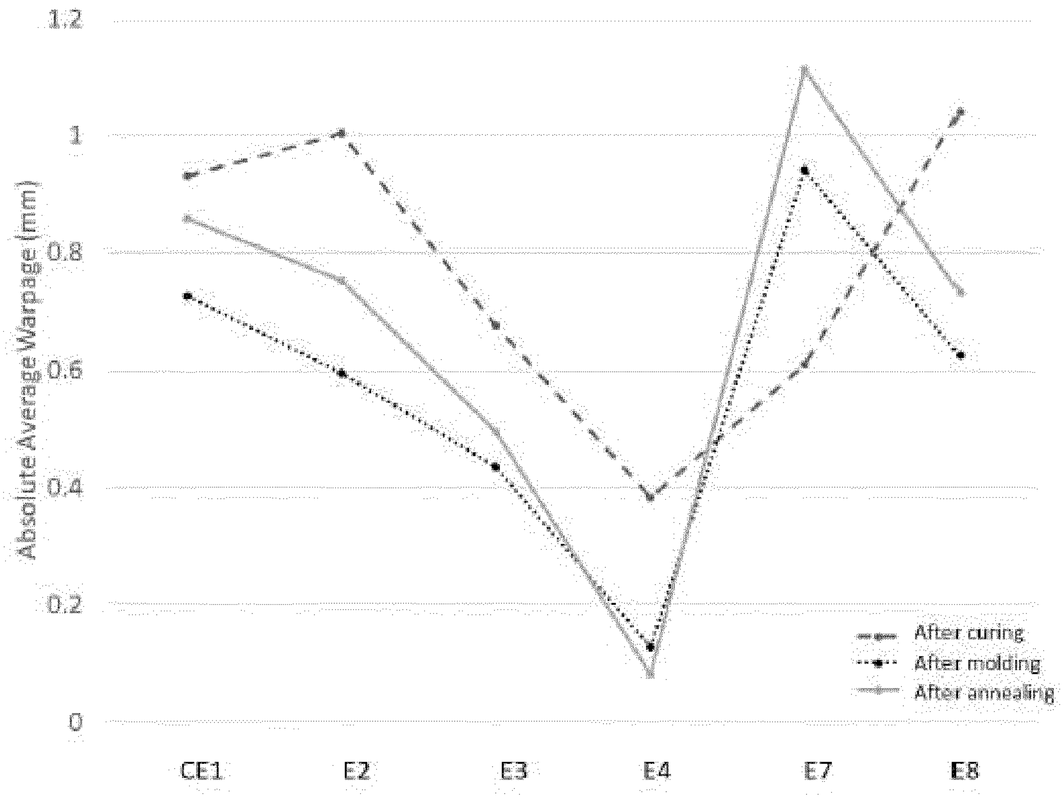
1.2
1
0.8
0.6
0.4
0.2
0
Absolute Average Warpage (mm)
CE1
E2
E3
E4
E7
E8
After curing
After molding
After annealing

FIG. 15

Europäisches Patentamt
European Patent Office
Office européen des brevets

# EUROPEAN SEARCH REPORT

Application Number
EP 19 17 6470

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | WO 2018/055603 A1 (SABIC GLOBAL TECHNOLOGIES BV [NL]) 29 March 2018 (2018-03-29)<br>* figures 5-8 * | 1-3,6-12<br>5,13,15 | INV.<br>C08L67/02<br>C08L63/00<br>C08L23/06<br>C08K5/5313<br>C08K7/14<br>C08G59/42 |
| X<br>Y | WO 2018/055604 A1 (SABIC GLOBAL TECHNOLOGIES BV [NL]) 29 March 2018 (2018-03-29)<br>* figures 4-10, 12 * | 1-3,6-12<br>5,13,15 | |
| X<br>Y | WO 2017/006263 A1 (SABIC GLOBAL TECHNOLOGIES BV [NL]) 12 January 2017 (2017-01-12)<br>* example 11; table 7 * | 1,6-11<br>5,13,15 | |
| X<br>Y | WO 2017/203467 A1 (SABIC GLOBAL TECHNOLOGIES BV [NL]) 30 November 2017 (2017-11-30)<br>* table 9; compound C4.1 * | 1,3,4, 6-11<br>5,13-15 | |
| Y | JP 2017 179105 A (UMG ABS LTD) 5 October 2017 (2017-10-05)<br>* paragraph [0094] * | 5 | TECHNICAL FIELDS SEARCHED (IPC)<br>C08L<br>C08G<br>C08K |
| Y | EP 2 977 409 A1 (TEIJIN LTD [JP]) 27 January 2016 (2016-01-27)<br>* paragraph [0282] * | 5 | |
| Y | WO 2016/009392 A1 (SABIC GLOBAL TECHNOLOGIES BV [NL]) 21 January 2016 (2016-01-21)<br>* paragraph [0142]; example 11 * | 13-15 | |
| X<br>Y | WO 2010/078140 A1 (SABIC INNOVATIVE PLASTICS IP [NL]; DING TIANHUA [US] ET AL.) 8 July 2010 (2010-07-08)<br>* paragraphs [0042], [0069]; tables 1-4 * | 1-4,6-12<br>5,13-15 | |

The present search report has been drawn up for all claims

1

| Place of search | Date of completion of the search | Examiner |
|---|---|---|
| The Hague | 29 August 2019 | Hoffmann, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 19 17 6470

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2019

| Patent document cited in search report | Publication date | Patent family member(s) | Publication date |
|---|---|---|---|
| WO 2018055603 A1 | 29-03-2018 | EP 3515980 A1 | 31-07-2019 |
| | | US 2019256705 A1 | 22-08-2019 |
| | | WO 2018055603 A1 | 29-03-2018 |
| WO 2018055604 A1 | 29-03-2018 | CN 109863197 A | 07-06-2019 |
| | | EP 3515977 A1 | 31-07-2019 |
| | | WO 2018055604 A1 | 29-03-2018 |
| WO 2017006263 A1 | 12-01-2017 | CN 107849226 A | 27-03-2018 |
| | | EP 3320015 A1 | 16-05-2018 |
| | | US 2018208711 A1 | 26-07-2018 |
| | | WO 2017006263 A1 | 12-01-2017 |
| WO 2017203467 A1 | 30-11-2017 | CN 109312113 A | 05-02-2019 |
| | | EP 3464449 A1 | 10-04-2019 |
| | | KR 20180136559 A | 24-12-2018 |
| | | US 2019177519 A1 | 13-06-2019 |
| | | WO 2017203467 A1 | 30-11-2017 |
| JP 2017179105 A | 05-10-2017 | NONE | |
| EP 2977409 A1 | 27-01-2016 | CN 105051110 A | 11-11-2015 |
| | | EP 2977409 A1 | 27-01-2016 |
| | | JP 6195904 B2 | 13-09-2017 |
| | | JP WO2014148641 A1 | 16-02-2017 |
| | | KR 20150132087 A | 25-11-2015 |
| | | TW 201502161 A | 16-01-2015 |
| | | US 2016024301 A1 | 28-01-2016 |
| | | WO 2014148641 A1 | 25-09-2014 |
| WO 2016009392 A1 | 21-01-2016 | CN 106795274 A | 31-05-2017 |
| | | EP 3169717 A1 | 24-05-2017 |
| | | US 2017218192 A1 | 03-08-2017 |
| | | WO 2016009392 A1 | 21-01-2016 |
| WO 2010078140 A1 | 08-07-2010 | CN 102317373 A | 11-01-2012 |
| | | EP 2370517 A1 | 05-10-2011 |
| | | JP 5501374 B2 | 21-05-2014 |
| | | JP 2012514113 A | 21-06-2012 |
| | | KR 20110119625 A | 02-11-2011 |
| | | US 2010168290 A1 | 01-07-2010 |
| | | WO 2010078140 A1 | 08-07-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20110319524 A
- WO 2012152859 A
- WO 2014086974 A


### Non-patent literature cited in the description


- **D. MONTARNAL et al.** *Science,* 2011, vol. 334, 965-968
- **J.P. BRUTMAN et al.** *ACS Macro Lett.,* 2014, vol. 3, 607-610